# EUROPEAN PATENT SPECIFICATION

(11) **EP 4 236 391 B1**
(45) Date of publication and mention of the grant of the patent: **26.08.2026**
(21) Application number: 23173201.7
(22) Date of filing: 29.12.2018
(51) Int. Cl.: H04W 4/24, H04L 12/14, H04M 15/00

(54) **CHARGING METHOD AND DEVICE AND SESSION MANAGEMENT ENTITY**
LADEVERFAHREN UND -VORRICHTUNG UND SITZUNGSVERWALTUNGSEINHEIT
PROCÉDÉ ET DISPOSITIF DE FACTURATION ET ENTITÉ DE GESTION DE SESSION

(30) Priority: 13.02.2018 CN 201810150941
(43) Date of publication of application: 30.08.2023
(62) Document number(s) of the earlier application(s) in accordance with Art. 76 EPC: 18906045.2 / 3 755 014
(73) Proprietor: ZTE Corporation, Shenzhen, Guangdong 518057 (CN)
(72) Inventor: YANG, Minggui, Shenzhen, 518057 (CN); LIN, Kai, Shenzhen, 518057 (CN); CHEN, Sheng, Shenzhen, 518057 (CN)
(74) Representative: Lavoix

(56) References cited:
- ANONYMOUS: "3rd Generation Partnership Project; Technical Specification Group Services and System Aspects; Telecommunication management; Charging management; Study on charging aspects of 5G system architecture phase 1 (Release 15)", 3GPP STANDARD; TECHNICAL REPORT; 3GPP TR 32.899, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V15.0.0, 31 January 2018 (2018-01-31), pages 1 - 104, XP051392332
- "3rd Generation Partnership Project; Technical Specification Group Services and System Aspects; System Architecture for the 5G System; Stage 2 (Release 15)", 3GPP STANDARD; TECHNICAL SPECIFICATION; 3GPP TS 23.501, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V1.5.0, 13 November 2017 (2017-11-13), pages 1 - 170, XP051391712
- ANONYMOUS: "3rd Generation Partnership Project; Technical Specification Group Services and System Aspects; Study on Architecture for Next Generation System (Release 14)", 3GPP STANDARD ; TECHNICAL REPORT ; 3GPP TR 23.799, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V14.0.0, 16 December 2016 (2016-12-16), pages 1 - 527, XP051295448

## Description

### TECHNICAL FIELD

The present application relates to the field of wireless communications, for example, relates to a charging method, a session management function, and a computer-readable storage medium.

### BACKGROUND

In the 4th generation mobile communication technology (4G) system, a public data network (PDN) Gate Way (PGW) has session management and message forwarding functions, and online charging is implemented by interactions between the PGW and an online charging system (OCS).

In the 5th generation (5G) system, session management is implemented in a session management function (SMF) and message forwarding is performed in a user plane function (UPF). Since the session management is separate from the message forwarding, an online charging manner in the 4G system is not applicable to the 5G system.

Document 1 "3rd Generation Partnership Project; Technical Specification Group Services and System Aspects; Telecommunication management; Charging management; Study on charging aspects of 5G system architecture phase l (Release 15)" defines interaction between SMF and charging domain for charging management.

Document 2 "3rd Generation Partnership Project; Technical Specification Group Services and System Aspects; System Architecture for the 5G System; Stage 2 (Release 15)" defines the system architecture of the 5G system.

Document 3 "3rd Generation Partnership Project; Technical Specification Group Services and System Aspects; Study on Architecture for Next Generation System (Release 14)" defines system architecture for the next generation mobile networks. The new architecture supports at least the new radio access technology RAT(s), the Evolved E-UTRA, non-3GPP accesses and minimize access dependencies.

How to achieve accurate charging in the 5G systems is a problem to be solved.

### SUMMARY

The present application provides a charging method, a charging device and a session management function, which can implement accurate charging in a communication system where a control plane is separate from a user plane.

An embodiment of the present application provides a charging method according to claim 1; a session management function according to claim 17 and a computer-readable storage medium according to claim 18. The dependent claims set out particular embodiments of the invention.

An embodiment of the present application further provides a charging device which is applied to a session management function (SMF). The device includes a charging identifier assignment module and a charging module.

The charging identifier assignment module is configured to create a session with an online charging system (OCS) for each of multiple user plane functions (UPFs) which carry user equipment service traffic, and assign different session identifiers and a unified charging identifier to sessions with a charging association.

The charging module is configured to send an online charging message to the OCS for any one session in the sessions with the charging association, where the online charging message carries a session identifier of the any one session and the charging identifier.

An embodiment of the present application provides a session management function, which includes a memory, a processor and a charging program stored in the memory and executable by the processor, where the charging program, when executed by the processor, implements the charging method described above.

An embodiment of the present application provides a computer-readable storage medium, which is configured to store a charging program which, when executed by a processor, implements the charging method described above.

### BRIEF DESCRIPTION OF DRAWINGS

FIG. 1 is a schematic diagram of network architecture (having an uplink classifier) in a 5G communication system in the related art;
FIG. 2 is a flowchart of a charging method according to embodiment 1 of the present application;
FIG. 3 is a schematic diagram of a charging device according to embodiment 2 of the present application;
FIG. 4 is a flowchart of a charging process in a common non-roaming scenario in example 3 of the present application;
FIG. 5 is a flowchart of a charging process in a scenario of service session connection (SSC) mode 2 in example 4 of the present application;
FIG. 6 is a flowchart of a charging process in a scenario of SSC mode 3 in example 5 of the present application;
FIG. 7 is a flowchart of a charging process in a scenario where an uplink classifier exists and an anchor is separate from a branch point in example 6 of the present application;
FIG. 8 is a flowchart of a charging process in a scenario where an uplink classifier exists and an anchor is integrated with a branch point in example 7 of the present application;
FIG. 9 is a flowchart of a charging process in a scenario of non-roaming traffic offloaded onto MEC in example 8 of the present application;
FIG. 10 is a flowchart of a charging process in a roaming scenario in example 9 of the present application;
FIG. 11 is a flowchart of a charging process in a scenario where an uplink classifier exists and roaming traffic is locally offloaded in example 10 of the present application; and
FIG. 12 is a flowchart of a charging process in a scenario where roaming traffic is locally offloaded through MEC in example 11 of the present application.

### DETAILED DESCRIPTION

Embodiments of the present application will be described hereinafter in detail with reference to the drawings. It is to be noted that if not in collision, the embodiments and features therein in the present application may be combined with each other.

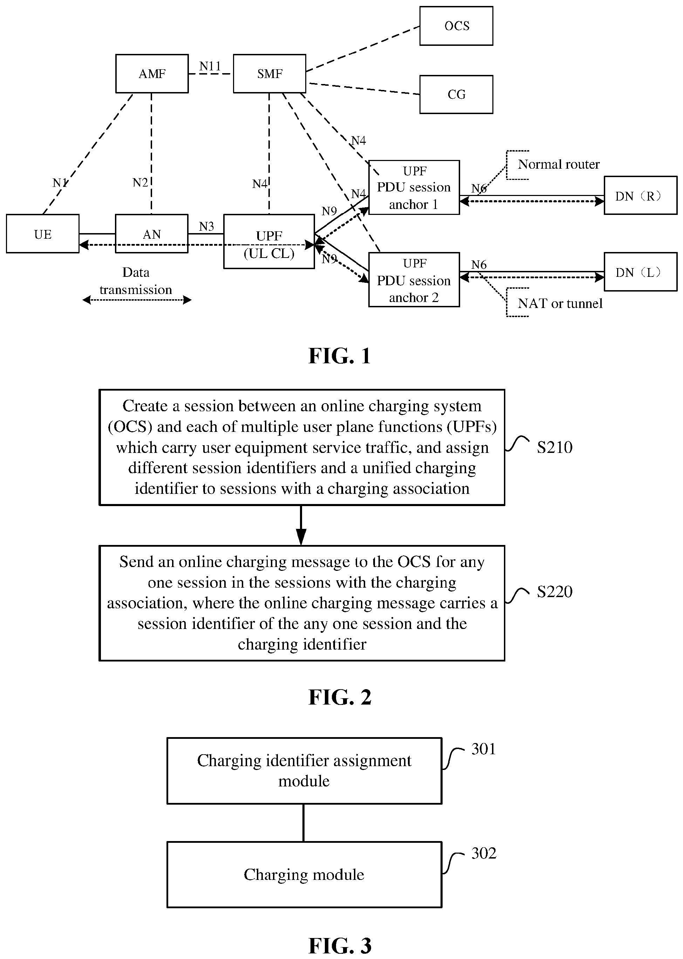

As shown in FIG. 1, in a 5th generation (5G) system, an access and mobility management function (AMF) undertakes user access and mobility management, a session management function (SMF) undertakes session management, a user plane function (UPF) undertakes traffic forwarding, an OCS undertakes online charging, and a charging gateway (CG) undertakes offline charging. A user terminal accesses a network through an access network (AN), the AMF performs an access and the SMF creates sessions, the UPF undertakes the traffic forwarding, collects charging information and sends the collected charging information to the SMF, and the SMF generates charging bills for the CG and the OCS. In the 5G system, the session management is implemented by the SMF and message forwarding is performed by the UPF. Since the session management is separate from the message forwarding, an online charging manner in a 4G system is not applicable to the 5G system. Especially, when an uplink classifier (UL CL), multi-homing and other technologies are introduced in the 5G system, for a same protocol data unit (PDU) session, services may exist on UPF anchor 1 and UPF anchor 2 simultaneously, and one SMF needs to simultaneously manage multiple UPFs during one session to achieve online charging.

### Embodiment 1

As shown in FIG. 2, an embodiment of the present application provides a charging method which is applied to a session management function (SMF). The method includes step S210 and step S220.

In step S210, a session with an online charging system (OCS) is created for each of multiple user plane functions (UPFs) which carry user equipment service traffic, and different session identifiers and a unified charging identifier are assigned to sessions with a charging association.

In step S220, an online charging message is sent to the OCS for any one session in the sessions with the charging association, where the online charging message carries a session identifier of the any one session and the charging identifier.

In the embodiment, after the session is successfully created, charging granularity may be based on anchor UPF, and the number of sessions between the SMF and the OCS is the same as the number of anchor user plane functions (UPFs).

In an implementation, the online charging message is a Credit Control Request(Termination) (CCRt) message.

In an implementation, the charging identifier includes a charging identifier sequence number and an identifier of a network element which creates the charging identifier sequence number.

The charging identifier sequence number ensures that a digital sequence is not repeated within a network range managed by the network element. The identifier of the network element can ensure that the charging identifier is not repeated in an entire network.

For example, the identifier of the network element of the SMF is ChinaMobile-BeiJing02, the charging identifier sequence number generated by the SMF is "12345", and then a complete form of the charging identifier is "ChinaMobile-BeiJing02-12345".

In an implementation, the charging identifier may be transferred through at least one of a request message or a response message between network elements, where the request message may be regarded as a forward transfer and the response message may be regarded as a backward transfer.

In an implementation, in a scenario of service session connection (SSC) mode 2 or SSC mode 3, the sessions with the charging association include a first session corresponding to a first anchor UPF before session switching and a second session corresponding to a second anchor UPF after the session switching.

In an implementation, in the scenario of service session connection (SSC) mode 2 or SSC mode 3, the method further includes that the SMF sends offline charging bills to a charging gateway (CG) separately for the first session and the second session with the charging association to count traffic information before the session switching and traffic information after the session switching separately.

In an implementation, in a scenario of non-roaming and an uplink classifier, the sessions with the charging association include sessions corresponding to multiple anchor UPFs carrying service traffic split by the uplink classifier into flows.

In an implementation, in the scenario of the non-roaming and the uplink classifier, the method further includes a step described below. If the SMF receives trigger indication information sent by the OCS and a trigger corresponding to the trigger indication information is related to notifying the OCS of a change of the uplink classifier, or the SMF is locally configured with a service rule for notifying the OCS of the change of the uplink classifier, the SMF, after inserting the uplink classifier, notifies the OCS that the uplink classifier has been inserted for uplink services, and receives a new traffic quota re-delivered by the OCS for a session that already exists before the uplink classifier is inserted.

In an implementation, in the scenario of the non-roaming and the uplink classifier, the method further includes that the SMF sends an offline charging bill to the charging gateway (CG) for each of the sessions with the charging association to count information about traffic carried by each of the multiple anchor UPFs.

In an implementation, in the scenario of the non-roaming and the uplink classifier, the uplink classifier is independently disposed on one UPF or one UPF is reused by one anchor UPF and the uplink classifier.

In an implementation, in the scenario of the non-roaming and the uplink classifier, the method further includes that the SMF sends an offline charging bill to the charging gateway (CG) for the uplink classifier to count information about traffic assigned by the uplink classifier to each of the multiple anchor UPFs.

In an implementation, in a scenario of non-roaming traffic offloaded onto a mobile edge computing (MEC), the sessions with the charging association includes a first session corresponding to a first anchor UPF carrying a part of service traffic and a second session corresponding to a second UPF serving as the MEC and carrying the other part of the service traffic.

In an implementation, in a scenario of roaming traffic locally offloaded through a visit anchor UPF, the sessions with the charging association include a first session corresponding to a home anchor UPF carrying partial roaming traffic and a second session corresponding to the visit anchor UPF carrying the roaming traffic locally offloaded in a roaming area.

In a scenario of roaming traffic locally offloaded through a mobile edge computing (MEC) in a roaming area, the sessions with the charging association include a first session corresponding to a home anchor UPF carrying partial roaming traffic and a second session corresponding to the MEC in the roaming area carrying the roaming traffic locally offloaded in the roaming area.

In an implementation, in the scenario of the roaming traffic locally offloaded through the visit anchor UPF or the mobile edge computing (MEC) in the roaming area, the method further includes a step described below. When the SMF is a visit SMF, the visit SMF sends an offline charging bill to the charging gateway (CG) to count information about the roaming traffic carried by the home anchor UPF and information about the roaming traffic locally offloaded through the visit anchor UPF or the MEC in the roaming area. When the SMF is a home SMF, the home SMF sends an offline charging bill to the charging gateway (CG) to count the information about the roaming traffic carried by the home anchor UPF.

### Embodiment 2

As shown in FIG. 3, an embodiment of the present application provides a charging device which is applied to a session management entity (SMF). The device includes a charging identifier assignment module 301 and a charging module 302.

The charging identifier assignment module 301 is configured to create a session with an online charging system (OCS) for each of multiple user plane functions (UPFs) which carry user equipment service traffic, and assign different session identifiers and a unified charging identifier to sessions with a charging association.

The charging module 302 is configured to send an online charging message to the OCS for any one session in the sessions with the charging association, where the online charging message carries a session identifier of the any one session and the charging identifier.

In an implementation, in a scenario of service session connection (SSC) mode 2 or SSC mode 3, the sessions with the charging association include a first session corresponding to a first anchor UPF before session switching and a second session corresponding to a second anchor UPF after the session switching.

In an implementation, in the scenario of service session connection (SSC) mode 2 or SSC mode 3, the charging module is further configured to send offline charging bills to a charging gateway (CG) separately for the first session and the second session with the charging association to count traffic information before the session switching and traffic information after the session switching separately.

In an implementation, in a scenario of non-roaming and an uplink classifier, the sessions with the charging association include sessions corresponding to multiple anchor UPFs carrying service traffic split by the uplink classifier into flows.

In an implementation, in the scenario of the non-roaming and the uplink classifier, the device further includes a trigger processing module.

If the SMF receives trigger indication information sent by the OCS and a trigger corresponding to the trigger indication information is related to notifying the OCS of a change of the uplink classifier, or the SMF is locally configured with a service rule for notifying the OCS of the change of the uplink classifier, after the SMF inserts the uplink classifier, the trigger processing module is configured to notify the OCS that the uplink classifier has been inserted for uplink services, and receive a new traffic quota re-delivered by the OCS for a session that already exists before the uplink classifier is inserted.

In an implementation, in the scenario of the non-roaming and the uplink classifier, the charging module is further configured to send an offline charging bill to the charging gateway (CG) for each of the sessions with the charging association to count information about traffic carried by each of the multiple anchor UPFs.

In an implementation, in the scenario of the non-roaming and the uplink classifier, the charging module is further configured to send an offline charging bill to the charging gateway (CG) for the uplink classifier to count information about traffic assigned by the uplink classifier to each of the multiple anchor UPFs.

In an implementation, in a scenario of non-roaming traffic offloaded onto a mobile edge computing (MEC), the sessions with the charging association include a first session corresponding to a first anchor UPF carrying a part of service traffic and a second session corresponding to a second UPF serving as the MEC and carrying the other part of the service traffic.

In an implementation, in a scenario of roaming traffic locally offloaded through a visit anchor UPF, the sessions with the charging association include a first session corresponding to a home anchor UPF carrying partial roaming traffic and a second session corresponding to the visit anchor UPF carrying the roaming traffic locally offloaded in a roaming area.

In a scenario of roaming traffic locally offloaded through a mobile edge computing (MEC) in a roaming area, the sessions with the charging association include a first session corresponding to a home anchor UPF carrying partial roaming traffic and a second session corresponding to the MEC in the roaming area carrying the roaming traffic locally offloaded in the roaming area.

In an implementation, in the scenario of the roaming traffic locally offloaded through the visit anchor UPF or the mobile edge computing (MEC) in the roaming area, the charging module is further configured to: when the SMF is a visit SMF, send an offline charging bill to the charging gateway (CG) to count information about the roaming traffic carried by the home anchor UPF and information about the roaming traffic locally offloaded through the visit anchor UPF or the MEC in the roaming area; or when the SMF is a home SMF, send an offline charging bill to the charging gateway (CG) to count the information about the roaming traffic carried by the home anchor UPF.

In an implementation, the charging identifier includes a charging identifier sequence number and an identifier of a network element which creates the charging identifier sequence number.

In an implementation, the charging identifier is transferred through at least one of a request message or a response message between network elements.

### Embodiment 3

An embodiment of the present application provides a session management function, which includes a memory, a processor and a charging program stored in the memory and executable by the processor, where the charging program, when executed by the processor, implements the charging method according to embodiment 1.

### Embodiment 4

An embodiment of the present application provides a computer-readable storage medium, which is configured to store a charging program which, when executed by a processor, implements the charging method according to embodiment 1.

Compared with the related art, the present application provides the charging method, the charging device and the session management function, where the session management function creates the session with the online charging system (OCS) for each of the multiple user plane function (UPFs) which carry the user equipment service traffic, and assigns the different session identifiers and the unified charging identifier to the sessions with the charging association; and the session management function sends the online charging message to the OCS for any one session in the sessions with the charging association, where the online charging message carries the session identifier of the any one session and the charging identifier. The present application can implement accurate charging in a communication system in which a control plane is separate from a user plane.

Solutions of a 5G charging method in various scenarios are described below in detail through some examples.

### Example 1

A method for generating a charging identifier in a 5G system is described in the example.

In the related art, a charging identifier (ChargingID) in a 4G system is generated by a PGW and is generally a string of numbers unique within a network element. In the case of roaming, although the ChargingID also needs to be transferred from the PGW to the serving gateway (SGW) in 4G protocols, only the method for generating the ChargingID by the PGW will not cause conflicts or ambiguity of the ChargingID during online charging in the 4G system since the SGW does not support the online charging and there is no interface between the SGW and an online charging system (OCS).

However, under a 5G framework, an SMF performs session management, and both a visit SMF and a home SMF may trigger the OCS to generate call detail records (CDRs). Therefore, although the ChargingID generated in a 4G manner is locally unique within the network element, the ChargingID cannot meet the requirement of global uniqueness in an entire network.

In the charging method in the 5G system in the example, the ChargingID includes a ChargingID sequence number and an identifier of a corresponding network element which generates the sequence number (Generator-Host-Name). The Generator-Host-Name ensures that there is no conflict between SMFs in the entire network, and a Node-Id may be used. The sequence number ensures that a digital sequence in the SMF is not repeated. The ChargingID generated in this way is unique in the entire network. For example, the Generator-Host-Name of the SMF is ChinaMobile-BeiJing02, the ChargingID sequence number generated by the SMF is "12345", and then a complete form of the ChargingID is "ChinaMobile-BeiJing02-12345".

### Example 2

A method for transferring a charging identifier in a 5G system is described in the example.

In the related art, a ChargingID in a 4G system is generated by a PGW and transferred to an SGW, that is to say, the ChargingID will only be reversely transferred in a Create Session Response message from the PGW to the SGW (PGW→SGW).

However, under a 5G framework, how to transfer a ChargingID between multiple SMFs needs to be reconsidered due to scenarios such as roaming and local offloading of traffic. In a roaming scenario, a home SMF (Home-SMF) assigns a ChargingID, and transfers the ChargingID to a visit SMF (Visit-SMF) through a Create PDU Session Response message. When the visit SMF triggers a mobile edge computing (MEC) or another SMF, the ChargingID may be transferred to the MEC or the other SMF through a Create PDU Session Request message. In a non-roaming scenario, after the SMF generates the ChargingID, the MEC may be triggered by a Create PDU Session Request and the ChargingID is transferred to the MEC. Therefore, in the 5G system, the charging problem in a traffic offload scenario can be solved through forward and backward transfers of the ChargingID.

### Example 3

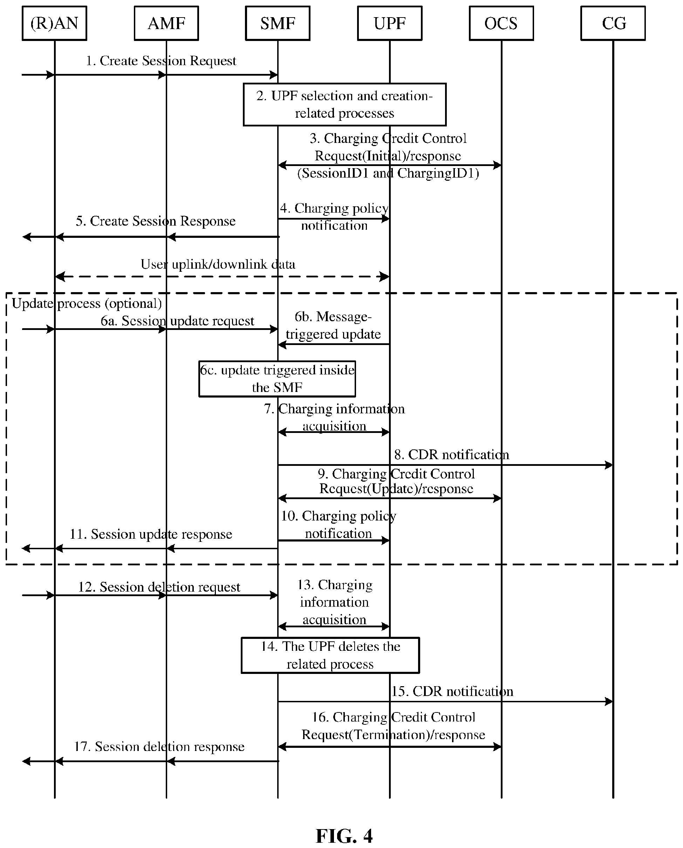

As shown in FIG. 4, a charging process in a non-roaming scenario may include steps (1) to (17) described below.
(1) A user uses a data service, a user equipment (UE) initiates a Create PDU Session Request which is transferred to an SMF through a radio access network (RAN) and an authentication management function (AMF), and the SMF generates ChargingID1, SessionID1 and other data.

A method for generating ChargingID1 may be a method in example 1.
(2) The SMF selects a UPF and creates a user plane channel for the user.
(3) The SMF sends a Credit Control Request(Initial) (CCRi) message carrying ChargingID1, SessionID1 and other data to an OCS; after receiving the request, the OCS performs credit authorization on the user according to user information. A quota of the user, a Trigger-Type and other information are carried.

A 3rd Generation Partnership Project (3GPP) TS 32299 protocol (Diameter protocol charging standard) defines whether to report an attribute type and an attribute value pair (AVP) of the Trigger-Type of the OCS when a charging condition changes. The AVP is a method for uniformly encoding the attribute type and an attribute value. The present application may extend a type of the Trigger-Type in scenarios such as an uplink classifier for a 5G system.
(4) After receiving a response to the Credit Control Request(Initial) (CCRi) from the OCS, the SMF notifies the UPF of charging policies, and the UPF performs charging according to these charging policies.
(5) The SMF sends a Create PDU Session Response to the AMF, the AMF forwards the response to the UE through the RAN, and session creation is completed.

During the user uses the data service, in case of an update process, the process proceeds to (6), otherwise proceeds to (12).
(6) The update process is initiated in various ways, for example, (6a) the user position changes, etc. and the update process is initiated by the user, (6b) a charging trigger condition is reached, etc. and the update process is initiated by the UPF, and (6c) an internal charging condition of the SMF changes, etc..
(7) The SMF determines that a charging notification needs to be triggered, and the SMF needs to acquire from the UPF user plane-related charging information such as traffic, time and events.
(8) The SMF generates an SMF-Anchor CDR and sends it to a charging gateway (CG). The CDR carries UPF address information.
(9) The SMF sends a Credit Control Request(Update) (CCRu) message to the OCS; after receiving the request, the OCS performs deductions, re-ratings and other processing and performs new credit authorization on the user.
(10) The SMF notifies the UPF of new charging policies, and the UPF updates the charging policies. In case of a user-triggered update process, the process proceeds to (11), otherwise proceeds to (12), and the update process ends.
(11) The SMF sends an update response to the AMF, and the AMF sends it to the UE through the RAN.

(Note: The update process is similar to a deletion process in terms of charging policies and processes. The optional update process is not repeated hereinafter in other examples.)
(12) The UE initiates a session deletion request to the SMF through the RAN and the AMF.
(13) The SMF acquires from the UPF the user plane-related charging information.
(14) The SMF notifies the UPF to delete the session-related process.
(15) The SMF generates the SMF-Anchor CDR according to information acquired in the above step and sends it to the charging gateway (CG). The CDR carries the UPF address information and the CDR is closed.
(16) The SMF sends a Credit Control Request(Termination) (CCRt) message carrying related charging information to the OCS and terminates a session with the OCS.
(17) The SMF sends a session deletion response to the AMF, and the AMF sends it to the UE through the RAN. The process ends.

### Example 4

In a scenario of service session connection (SSC) mode 2, an original PDU session is released, and then a new PDU session is re-created. An SMF keeps ChargingID of CDRs generated in two PDU sessions before and after session switching unchanged, so as to be able to check all CDRs in a current service of a user through one ChargingID.

A SessionID for online charging at an OCS interface and offline charging at a CG interface remain consistent with a UPF, that is, after the old session is deleted, the SMF sends a CDR to a CG to end the offline charging session, and the SMF sends a charging Credit Control Request(Termination) (CCRt) to an OCS to end the online charging session (the old session). An original ChargingID is still used for creating the new session. After a new UPF is created, the SMF will open a new offline CDR, and meanwhile the SMF sends a Credit Control Request(Initial) (CCRi) message carrying a new SessionID to the OCS to start the new session.

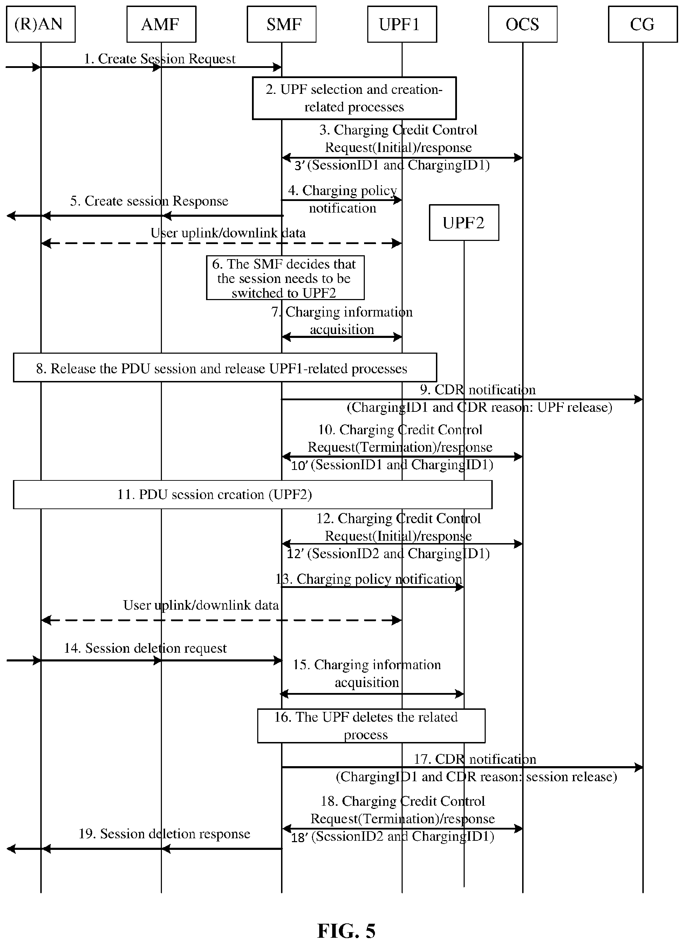

As shown in FIG. 5, a charging process may include steps (1) to (19) described below.
(1) The user uses a data service, a UE initiates a Create PDU Session Request which is transferred to the SMF through a RAN and an AMF, and the SMF generates ChargingID1, SessionID1 and other data.

A method for generating ChargingID1 may be a method in example 1.
(2) The SMF selects a UPF and creates a user plane channel for the user.
(3) The SMF sends the Credit Control Request(Initial) (CCRi) message carrying ChargingID1, SessionID1 and other data to the OCS; after receiving the request, the OCS performs credit authorization on the user according to user information. A quota of the user, a Trigger-Type and other information are carried.
(4) After receiving a response (3') to the Credit Control Request(Initial) (CCRi) from the OCS, the SMF notifies the UPF of charging policies, and the UPF performs charging according to these charging policies.
(5) The SMF sends a Create PDU Session Response to the AMF, the AMF forwards the response to the UE through the RAN, and session creation is completed.
(6) A user plane path needs to be switched since the user position moves, etc., and the SMF decides that a user plane session needs to be switched from UPF1 to UPF2 in SSC mode 2.
(7) The SMF acquires from UPF1 user plane-related charging information such as traffic, time and events.
(8) The SMF notifies UPF1 to delete the session-related process.
(9) The SMF generates an SMF-Anchor CDR according to information acquired in the above step and sends it to the charging gateway (CG). The CDR carries UPF1 address information and ChargingID1, and the CDR is closed due to a UPF release.
(10) The SMF sends a Credit Control Request(Termination) (CCRt) carrying related charging information (the UPF1 address information, ChargingID1, SessionID1 and the like) to the OCS and terminates charging of data messages on UPF1.
(11) Under control of the SMF, a PDU session to UPF2 is created, where the re-established PDU session needs to use the original ChargingID1.
(12) The SMF sends a Credit Control Request(Initial) (CCRi) to re-create a session with the OCS, where a SessionID is SessionID2 and ChargingID1 remains unchanged. The OCS sends a response (12') to the Credit Control Request(Initial) (CCRi) to the SMF after receiving the request and performing processing.
(13) The SMF notifies UPF2 of new charging policies, and UPF2 uses the charging policies for statistics.

At this time, uplink and downlink data of the user are forwarded through UPF2.
(14) The UE initiates a session deletion request to the SMF through the RAN and the AMF.
(15) The SMF acquires from UPF2 the user plane-related charging information.
(16) The SMF notifies UPF2 to delete the session-related process.
(17) The SMF generates an SMF-Anchor CDR according to information acquired in the above step and sends it to the charging gateway (CG). The CDR carries UPF2 address information, and the CDR is closed due to a session release.
(18) The SMF sends a Credit Control Request(Termination) (CCRt) message carrying related charging information (SessionID2, ChargingID1, the UPF2 address information and other parameters) to the OCS and terminates the session with the OCS.
(19) The SMF sends a session deletion response to the AMF, and the AMF sends it to the UE through the RAN. The process ends.

### Example 5

In a scenario of SSC mode 3, a new PDU session is re-created and then an original PDU session is released. An SMF keeps ChargingID of CDRs generated in two PDU sessions before and after session switching unchanged, so as to be able to check all CDRs in a current service of a user through one ChargingID.

An original ChargingID is still used for creating the new session. After a new UPF is created, the SMF will open a new offline CDR, and meanwhile the SMF sends a Credit Control Request(Initial) (CCRi) carrying a new SessionID to an OCS to start the new session.

After the old session is deleted, the SMF sends the CDR to a CG to end the offline charging session, and the SMF sends a charging Credit Control Request(Termination) (CCRt) to the OCS to end the online charging session (the old session).

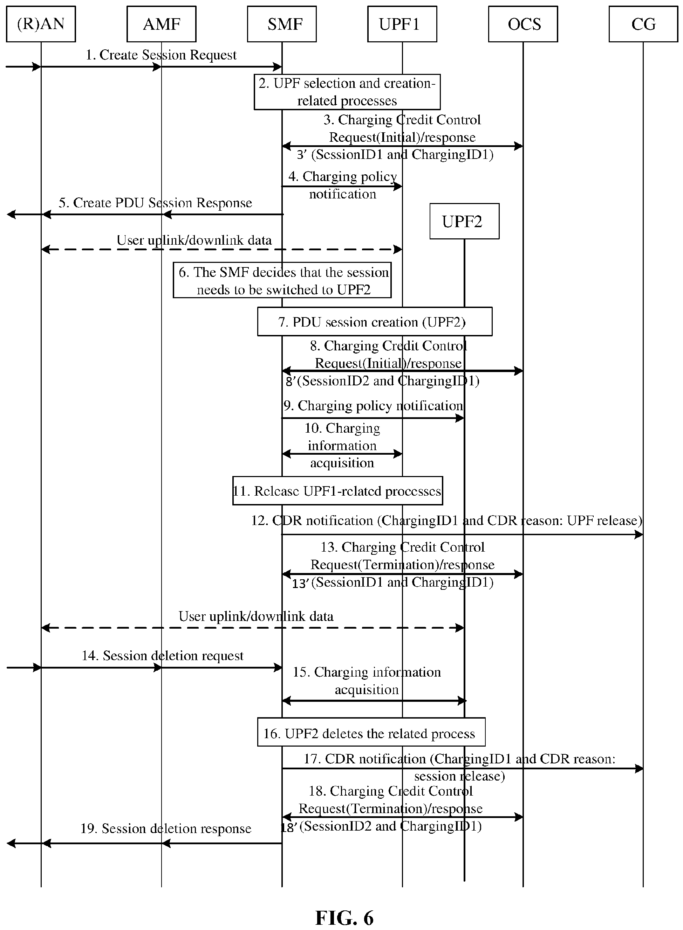

As shown in FIG. 6, a charging process in the scenario of SSC mode 3 may include steps (1) to (19) described below.
(1) The user uses a data service, a UE initiates a Create PDU Session Request which is transferred to the SMF through a RAN and an AMF, and the SMF generates ChargingID1, SessionID1 and other data.

A method for generating ChargingID1 may be a method in example 1.
(2) The SMF selects a UPF and creates a user plane channel for the user.
(3) The SMF sends the Credit Control Request(Initial) (CCRi) message carrying ChargingID1, SessionID1 and other data to the OCS; after receiving the request, the OCS performs credit authorization on the user according to user information. A quota of the user, a Trigger-Type and other information are carried.
(4) After receiving a response (3') to the Credit Control Request(Initial) (CCRi) from the OCS, the SMF notifies the UPF of charging policies, and the UPF performs charging according to these charging policies.
(5) The SMF sends a Create PDU Session Response to the AMF, the AMF forwards the response to the UE through the RAN, and session creation is completed.
(6) A user plane path needs to be switched since the user position moves, etc., and the SMF decides that a user plane session needs to be switched from UPF1 to UPF2 in SSC mode 3.
(7) Under control of the SMF, a PDU session to UPF2 is created.
(8) The SMF sends a Credit Control Request(Initial) (CCRi) to re-create a session with the OCS, where a SessionID is SessionID2 and ChargingID1 remains unchanged. The OCS sends a response (8') to the Credit Control Request(Initial) (CCRi) to the SMF after receiving the request and performing processing.
(9) The SMF notifies UPF2 of new charging policies, and UPF2 uses the charging policies for statistics.
(10) The SMF acquires from UPF1 user plane-related charging information such as traffic, time and events.
(11) The SMF notifies UPF1 to delete the session-related process.
(12) The SMF generates an SMF-Anchor CDR according to information acquired in the above step and sends it to the charging gateway (CG). The CDR carries UPF1 address information and ChargingID1, and the CDR is closed due to a UPF release.
(13) The SMF sends a Credit Control Request(Termination) (CCRt) carrying related charging information (the UPF1 address information, ChargingID1, SessionID1 and the like) to the OCS and terminates charging of data messages on UPF1.

At this time, uplink and downlink data of the user are forwarded through UPF2.
(14) The UE initiates a session deletion request to the SMF through the RAN and the AMF.
(15) The SMF acquires from UPF2 the user plane-related charging information.
(16) The SMF notifies UPF2 to delete the session-related process.
(17) The SMF generates an SMF-Anchor CDR according to information acquired in the above step and sends it to the charging gateway (CG). The CDR carries UPF2 address information, and the CDR is closed due to a session release.
(18) The SMF sends a Credit Control Request(Termination) (CCRt) message carrying related charging information (SessionID2, ChargingID1, the UPF2 address information and other parameters) to the OCS and terminates the session with the OCS.
(19) The SMF sends a session deletion response to the AMF, and the AMF sends it to the UE through the RAN. The process ends.

Charging processes in a scenario of non-roaming and an uplink classifier are described below in example 6 and example 7. A process for the uplink classifier in a multi-UPF scenario does not exist in a 4G system. In the multi-UPF scenario, different charging policies may be adopted for data messages through different paths. Therefore, it is necessary to explicitly distinguish messages through the different paths in a CDR and thus a charging framework in the multi-UPF scenario is designed to separately charge based on different UPFs, and may also charge for the uplink classifier. A purpose of the charging for the uplink classifier is to satisfy operation requirements such as inter-network settlement.

Although separate charging is performed for multiple UPFs, an anchor UPF has different charging policies from a UPF serving as the uplink classifier. Online charging plus offline charging may be adopted for the anchor UPF, but only an offline CDR needs to be provided for the uplink classifier to prevent repeated charging of an OCS. The offline CDR may separately reflect traffic of the uplink classifier to different anchor UPFs. Online charging CCR messages triggered by two anchor points carry a same ChargingID and different SessionIDs, that is, the two anchor points belong to different Diameter sessions, and charging may be controlled independently.

Whether the offline CDR is provided for the uplink classifier may be implemented through charging policies or local configurations of an SMF. For example, whether the OCS is notified of a process of inserting the uplink classifier may be implemented by extending a Trigger-Type AVP. An AVP with a value of 90 and a type of "CHANGE_OF_ADD_UL CL_UPF" is added, that is, a trigger notifying a change of the uplink classifier. If the OCS delivers the Trigger-Type with the value of 90, the OCS is notified through a Credit Control Request(Update) message in the process of inserting the uplink classifier. If a Trigger-Type AVP is not extended, whether to trigger the OCS may be locally configured by the SMF.

### Example 6

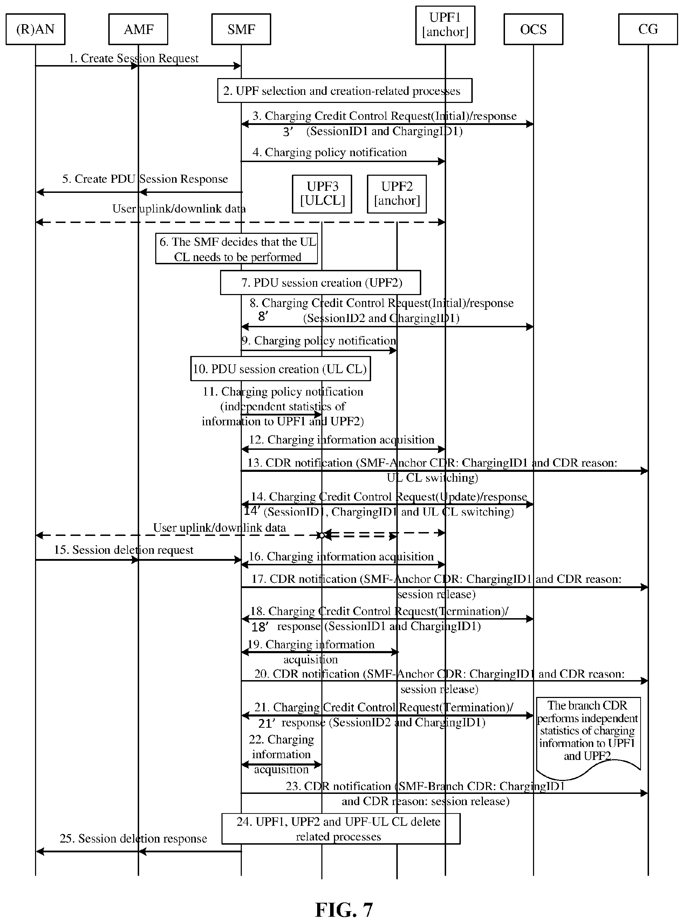

As shown in FIG. 7, in a scenario of non-roaming and an uplink classifier, when an anchor point is separate from a branch point (the uplink classifier), a charging process may include steps (1) to (25) described below.
(1) A user uses a data service, a UE initiates a Create PDU Session Request which is transferred to an SMF through a RAN and an AMF, and the SMF generates ChargingID1, SessionID1 and other data.
(2) The SMF selects a UPF according to a processing rule of the SMF and creates a user plane channel for the user.
(3) The SMF sends a Credit Control Request(Initial) (CCRi) message carrying ChargingID1, SessionID1 and other data to an OCS; after receiving the request, the OCS performs credit authorization on the user according to user information. A quota of the user, a Trigger-Type and other information are carried. The Trigger-Type delivered by the OCS in the example includes "a trigger notifying a change of the uplink classifier".
(4) After receiving a response (3') to the Credit Control Request(Initial) (CCRi) from the OCS, the SMF notifies UPF1 of charging policies, and UPF1 performs charging according to these charging policies.
(5) The SMF sends a Create PDU Session Response to the AMF, the AMF sends the response to the UE through the RAN, and session creation is completed.

User data messages are forwarded through RAN---UPF1.
(6) Due to a change of the service used by the user, etc., the SMF decides that a process of the UL CL needs to be performed to locally offload traffic.
(7) Under control of the SMF, a session to another anchor UPF2 is created to get connected to a local server, etc.
(8) The SMF sends a Credit Control Request(Initial) (CCRi) to re-create a session with the OCS, where a SessionID is SessionID2 and ChargingID1 remains unchanged. At this time, two sessions coexist between the SMF and the OCS. The OCS sends a response (8') to the Credit Control Request(Initial) (CCRi) to the SMF after receiving the request and performing processing.
(9) The SMF notifies UPF2 of a new charging policy, and UPF2 uses the charging policy for statistics.
(10) The SMF controls UPF3 (UL CL) to be created.
(11) The SMF delivers charging policy information carrying a classification rule and other information to UPF3. Since UPF3 is the UL CL, a charging policy for UPF3 is only specific to information required by offline charging, and the charging policy delivered by the SMF to UPF3 indicates that independent statistics and reporting need to be performed on information from UPF3 to UPF1 and information from UPF3 to UPF2.
(12) After UPF2 and UPF3 are created successfully, the SMF acquires from UPF1 user plane-related charging information such as traffic, time and events.
(13) The SMF generates an SMF-Anchor CDR according to information acquired in the above step and sends it to a charging gateway (CG). The CDR carries UPF1 address information, ChargingID1, a CDR closure reason (UL CL switching) and the like.
(14) In the example, since the OCS delivers the Trigger-Type, the "trigger notifying the change of the uplink classifier", the SMF sends a Credit Control Request(Update) (CCRu) carrying related charging information (the UPF1 address information, ChargingID1, SessionID1, etc.) to the OCS, and the OCS redistributes information such as the quota.

At this time, as for uplink and downlink data of the user, if a locally offloaded service is accessed, data is forwarded through a user plane channel RAN←→UPF3←→UPF2, and if a common service is accessed, data is forwarded through a user plane channel RAN←→UPF3←→UPF1; and the UL CL switching is completed.
(15) The UE initiates a session deletion request to the SMF through the RAN and the AMF.
(16) The SMF acquires from UPF1 user plane-related charging information. (The SMF may acquire from three UPFs charging information and issue CDRs in parallel. For convenience of description, a serial manner is illustrated in the drawings).
(17) The SMF generates an SMF-Anchor CDR according to information acquired in the above step and sends it to the charging gateway (CG). The CDR carries the UPF1 address information, information indicating a CDR closure, a closure reason (a session release) and the like.
(18) The SMF sends a Credit Control Request(Termination) (CCRt) message carrying related charging information (SessionID1, ChargingID1, the UPF1 address information and other parameters) to the OCS and terminates the session with the OCS.
(19) The SMF acquires from UPF2 user plane-related charging information.
(20) The SMF generates an SMF-Anchor CDR according to information acquired in the above step and sends it to the charging gateway (CG). The CDR carries UPF2 address information, information indicating a CDR closure, a closure reason (the session release) and the like.
(21) The SMF sends a Credit Control Request(Termination) (CCRt) message carrying related charging information (SessionID2, ChargingID1, the UPF2 address information and other parameters) to the OCS and terminates the session with the OCS.
(22) The SMF acquires from UPF3 user plane-related charging information.
(23) The SMF generates an SMF-Branch CDR according to information acquired in the above step and sends it to the charging gateway (CG). The CDR carries UPF3 address information, and the CDR is closed due to a session release. The SMF-Branch CDR includes traffic forwarded through RAN←→UPF3←→UPF2 and traffic forwarded through RAN←→UPF3←→UPF1.
(24) The SMF notifies UPF1, UPF2 and UPF3 to delete session-related processes, which is omitted herein.
(25) The SMF sends a session deletion response to the AMF, and the AMF sends it to the UE through the RAN. The process ends.

In the multi-anchor UPF scenario where the uplink classifier exists, when anchor switching is performed, a new anchor is inserted and an old anchor is deleted, or the old anchor is deleted and the new anchor is inserted, which belongs to a combined process of an SSC Mode and the uplink classifier and may refer to example 4, example 5 and the example.

The example is described for the scenario of the non-roaming and the uplink classifier. A processing manner is similar in a scenario of non-roaming and multi-homing.

### Example 7

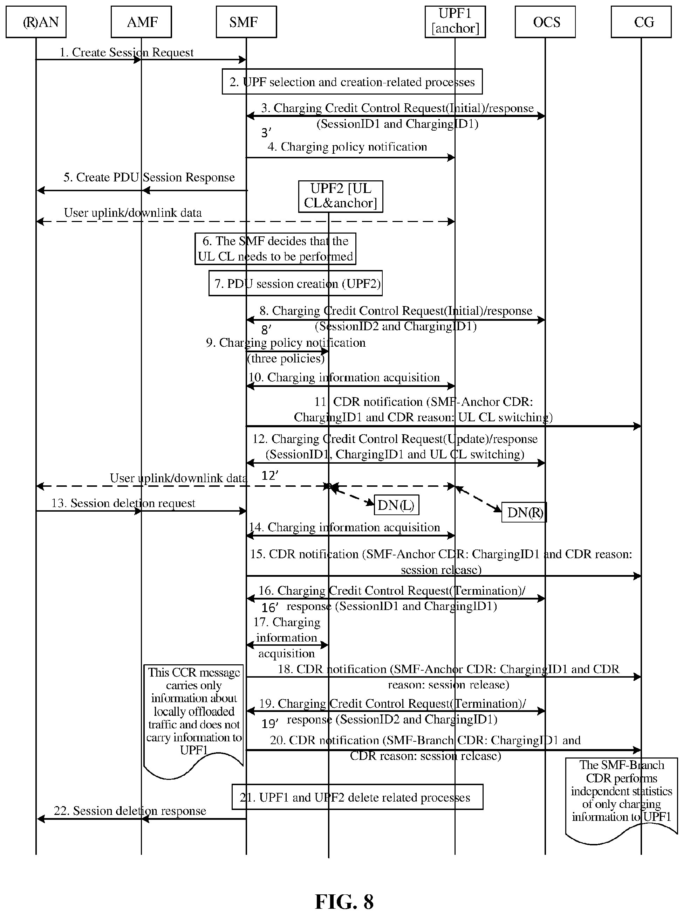

As shown in FIG. 8, in a scenario of non-roaming and an uplink classifier, when an anchor point is integrated with a branch point (the uplink classifier), a charging process may include steps (1) to (22) described below.
(1) A user uses a data service, a UE initiates a Create PDU Session Request which is transferred to an SMF through a RAN and an AMF, and the SMF generates ChargingID1, SessionID1 and other data.
(2) The SMF selects a UPF according to a processing rule of the SMF and creates a user plane channel for the user.
(3) The SMF sends a Credit Control Request(Initial) (CCRi) message carrying ChargingID1, SessionID1 and other data to an OCS; after receiving the request, the OCS performs credit authorization on the user according to user information. A quota of the user, a Trigger-Type and other information are carried. The Trigger-Type delivered by the OCS in the example includes "a trigger notifying a change of the uplink classifier".
(4) After receiving a response (3') to the Credit Control Request(Initial) (CCRi) from the OCS, the SMF notifies the UPF of charging policies, and the UPF performs charging according to these charging policies.
(5) The SMF sends a Create PDU Session Response to the AMF, the AMF sends the response to the UE through the RAN, and session creation is completed.

User data messages are forwarded through RAN---UPF1.
(6) Due to a change of the service used by the user, etc., the SMF decides that a process of the UL CL needs to be performed to locally offload traffic.
(7) Under the control of the SMF, a session to another anchor UPF2 is created to get connected to a local server, etc. In the example, UPF2 serves as both an anchor point of the local server and the UL CL.
(8) Since UPF2 also serves as the anchor point, the SMF sends the Credit Control Request(Initial) (CCRi) to re-create a session with the OCS, where a SessionID is SessionID2 and ChargingID1 remains unchanged. At this time, two sessions coexist between the SMF and the OCS. The OCS sends a response (8') to the Credit Control Request(Initial) (CCRi) to the SMF after receiving the request and performing processing.
(9) The SMF delivers charging policy information carrying a classification rule and other information to UPF2. Since UPF2 serves as both the UL CL and the anchor point, the charging policy information for UPF2 includes the following parts: an online changing policy for UPF2 as the anchor point, an offline charging policy for UPF2 as the anchor point for locally offloaded traffic, and an offline charging policy for UPF2 as the UL CL for traffic distributed to UPF1. (The example is different from example 6, UPF2 as the UL CL to locally offload traffic is completely the same as UPF2 as the anchor point to locally offload traffic, so independent statistics is no longer needed.)
(10) After UPF2 is created successfully, the SMF acquires from UPF1 user plane-related charging information such as traffic, time and events.
(11) The SMF generates an SMF-Anchor CDR according to information acquired in the above step and sends it to the charging gateway (CG). The CDR carries UPF1 address information and ChargingID1, and the CDR is closed due to UL CL switching.
(12) In the example, since the OCS delivers the Trigger-Type, the "trigger notifying the change of the uplink classifier", the SMF sends a Credit Control Request(Update) (CCRu) carrying related charging information (the UPF1 address information, ChargingID1, SessionID1, etc.) to the OCS, and the OCS redistributes information such as the quota.

At this time, as for uplink and downlink data of the user, if a locally offloaded service is accessed, data is forwarded through a user plane channel RAN←→UPF2 to access a local data network (DN(L)), and if a common service is accessed, data is forwarded through a user plane channel RAN←→UPF2←→UPF1 to access a remote data network (DN(R)); and the UL CL switching is completed.
(13) The UE initiates a session deletion request to the SMF through the RAN and the AMF.
(14) The SMF acquires from UPF1 user plane-related charging information. (The SMF may acquire from two UPFs charging information and issue CDRs in parallel. For convenience of description, a serial manner is illustrated in the drawings).
(15) The SMF generates an SMF-Anchor CDR according to information acquired in the above step and sends it to a charging gateway (CG). The CDR carries UPF1 address information, and the CDR is closed due to a session release.
(16) The SMF sends a Credit Control Request(Termination) (CCRt) message carrying related charging information (SessionID1, ChargingID1, the UPF1 address information and other parameters) to the OCS and terminates the session with the OCS.
(17) The SMF acquires from UPF2 the user plane-related charging information.
(18) The SMF generates an SMF-Anchor CDR according to information acquired in the above step and sends it to the charging gateway (CG). The CDR carries UPF2 address information, and the CDR is closed due to the session release. This part of information is information about traffic locally offloaded through UPF2.
(19) The SMF sends a Credit Control Request(Termination) (CCRt) message carrying related charging information (SessionID2, ChargingID1, the UPF2 address information and other parameters) to the OCS and terminates the session with the OCS. This part of information is the information about traffic locally offloaded through UPF2.
(20) The SMF generates an SMF-Branch CDR and sends it to the charging gateway (CG). The CDR carries the UPF2 address information, and the CDR is closed due to the session release. This part of information is about traffic forwarded through RAN←→UPF2←→UPF1.
(21) The SMF notifies UPF1 and UPF2 to delete session-related processes, which is omitted herein.
(22) The SMF sends a session deletion response to the AMF, and the AMF sends it to the UE through the RAN. The process ends.

### Example 8

When traffic needs to be offloaded, an SMF triggers MEC by a Create PDU Session Request which carries a ChargingID generated by the SMF. At this time, a UPF serves as an anchor point for offloading traffic, a public anchor point and an uplink classifier. When the traffic is offloaded, the SMF needs to re-trigger a new session with an OCS with a different SessionID and the same ChargingID.

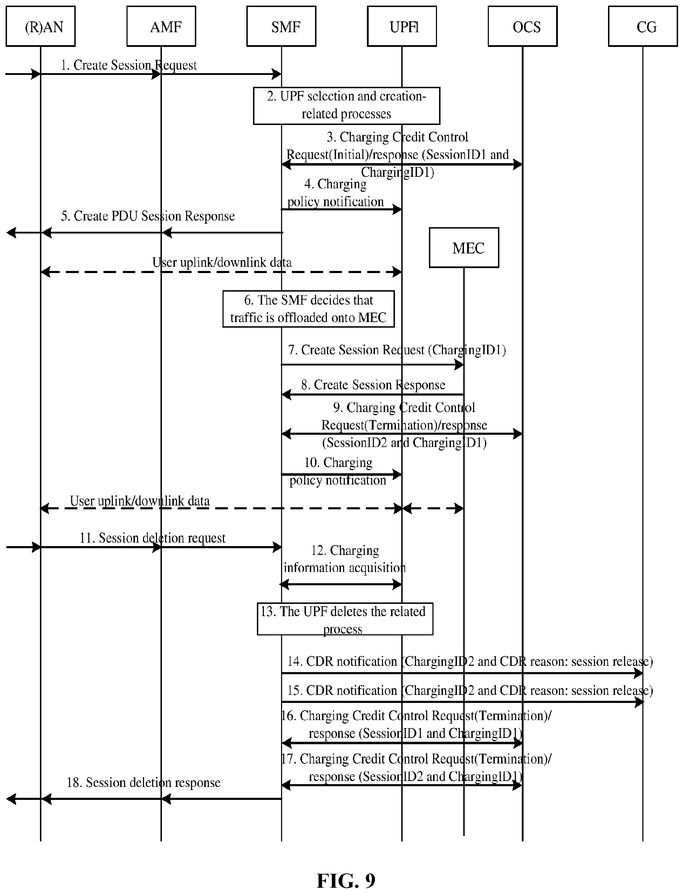

As shown in FIG. 9, a charging process in a non-roaming scenario of traffic offloaded onto the MEC may include steps (1) to (18) described below.
(1) A user uses a data service, a user equipment (UE) initiates a Create PDU Session Request which is transferred to the SMF through a RAN and an AMF, and the SMF generates ChargingID1, SessionID1 and other data.

A method for generating ChargingID1 may be a method in example 1.
(2) The SMF selects a UPF and creates a user plane channel for the user.
(3) The SMF sends a Credit Control Request(Initial) (CCRi) message carrying ChargingID1, SessionID1 and other data to the OCS; after receiving the request, the OCS performs credit authorization on the user according to user information. A quota of the user, a Trigger-Type and other information are carried.
(4) After receiving a response to the Credit Control Request(Initial) (CCRi) from the OCS, the SMF notifies the UPF of charging policies, and the UPF performs charging according to these charging policies.
(5) The SMF sends a Create PDU Session Response to the AMF, the AMF forwards the response to the UE through the RAN, and session creation is completed.
(6) The SMF decides that partial service traffic of the user needs to be offloaded onto the MEC.
(7) The SMF sends a Create PDU Session Request carrying ChargingID1 to the MEC.
(8) The MEC returns a Create PDU Session Response, and a session to the MEC is created.
(9) After completing traffic offloading, the SMF sends a Credit Control Request(Initial) (CCRi) to re-create a session with the OCS, where a SessionID is SessionID2 and ChargingID1 remains unchanged. The SMF applies to the OCS for a new quota. The OCS sends a response to the Credit Control Request(Initial) (CCRi) to the SMF after receiving the request and performing processing.
(10) The SMF notifies the UPF of new charging policies to notify that the UPF, serving as the anchor point for offloading traffic and the public anchor point, needs to separately perform statistics of service information of the user according to policies respectively corresponding to the anchor point for offloading traffic and the public anchor point.

At this time, as for uplink and downlink data of the user, if a locally offloaded service is accessed, data is forwarded through a user plane channel RAN←→UPF←→MEC to access a local traffic splitting server, and if a common service is accessed, data is forwarded through a user plane channel RAN←→UPF to access an external server; and a local offloading process is completed.
(11) The UE initiates a session deletion request to the SMF through the RAN and the AMF.
(12) The SMF acquires from the UPF user plane-related charging information including two pieces of independent information for the anchor point for offloading traffic and the public anchor point.
(13) The SMF notifies the UPF to delete a session-related process.
(14) The SMF generates an SMF-Anchor CDR according to information acquired in the above step and sends it to a charging gateway (CG). The CDR carries service information of the UPF as the public anchor point.
(15) The SMF generates an SMF-Anchor CDR according to information acquired in the above step and sends it to the charging gateway (CG). The CDR carries service information of the UPF as the anchor point for offloading traffic.
(16) The SMF sends a Credit Control Request(Termination) (CCRt) message carrying the service information of the UPF as the public anchor point (SessionID1 and ChargingID1) to the OCS and terminates the session with the OCS.
(17) The SMF sends a Credit Control Request(Termination) (CCRt) message carrying the service information of the UPF as the anchor point for offloading traffic (SessionID2 and ChargingID1) to the OCS and terminates the session with the OCS.
(18) The SMF sends a session deletion response to the AMF, and the AMF sends it to the UE through the RAN. The process ends.

### Example 9

In a roaming scenario, a ChargingID needs to be transferred from a home SMF (H-SMF) to a visit SMF (V-SMF). Both the V-SMF and the H-SMF issue offline CDRs whose types are an SMF-Visit CDR and an SMF-Anchor CDR. The H-SMF has an online charging interface to interact with an OCS for online charging, and the V-SMF has no online charging interface to interact with the OCS for online charging.

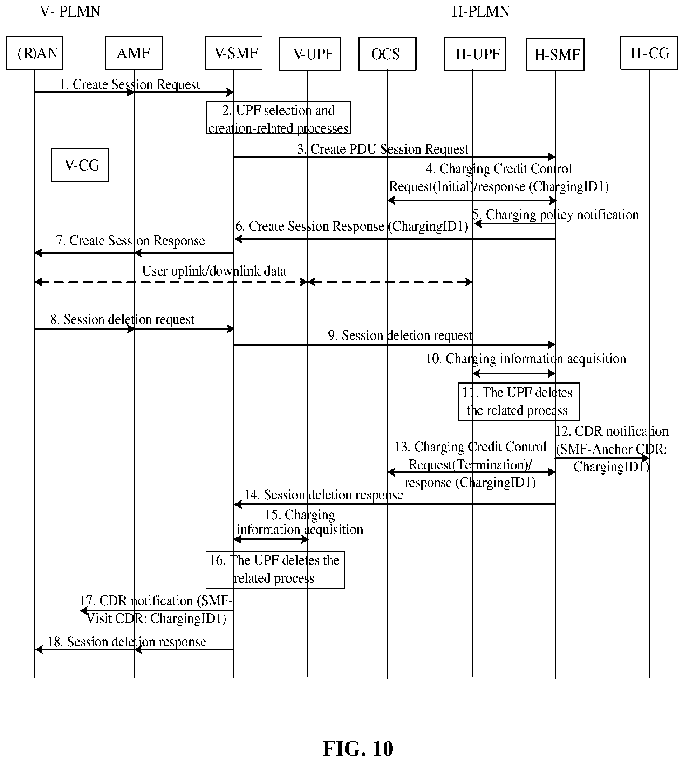

As shown in FIG. 10, a charging process in the roaming scenario may include steps (1) to (18) described below.
(1) A user uses a data service, a UE initiates a Create PDU Session Request which is sent to the visit SMF (V-SMF) through a RAN and an AMF, and the V-SMF determines that the user performs a visit access and requires a Home-routed Roaming router.
(2) The V-SMF selects a V-UPF and creates a user plane channel for the user.
(3) The V-SMF sends the Create PDU Session Request to the H-SMF.
(4) The H-SMF sends a Credit Control Request(Initial) (CCRi) message carrying ChargingID1, SessionID1 and other data to the OCS; after receiving the request, the OCS performs credit authorization on the user according to user information. A quota of the user, a Trigger-Type and other information are carried.

A method for generating ChargingID1 may be a method in example 1.
(5) After receiving a response to the Credit Control Request(Initial) (CCRi) from the OCS, the H-SMF notifies an H-UPF of charging policies, and the H-UPF performs charging according to these charging policies.
(6) The H-SMF sends a Create PDU Session Response to the V-SMF, where ChargingID1 is carried in the response message to the V-SMF.
(7) The V-SMF sends the Create PDU Session Response to the AMF, the AMF sends the response to the UE through the RAN, and session creation is completed.

At this time, data messages of the user are forwarded through RAN---V-UPF---H-UPF.
(8) The UE initiates a session deletion request to the V-SMF through the RAN and the AMF.
(9) The V-SMF forwards the session deletion request to the H-SMF.
(10) The H-SMF acquires from the H-UPF user plane-related charging information.
(11) The H-SMF notifies the H-UPF to delete a session-related process.
(12) The H-SMF generates an SMF-Anchor CDR according to information acquired in the above step and sends it to a charging gateway (CG). The CDR carries H-UPF address information and ChargingID1, and the CDR is closed due to a session release.
(13) The H-SMF sends a Credit Control Request(Termination) (CCRt) message carrying related charging information (SessionID1, ChargingID1, the H-UPF address information and other parameters) to the OCS and terminates the session with the OCS.
(14) The H-SMF sends a session deletion response to the V-SMF.
(15) The V-SMF acquires from the V-UPF user plane-related charging information.
(16) The V-SMF notifies the V-UPF to delete a session-related process.
(17) The V-SMF generates an SMF-Visit CDR according to information acquired in the above step and sends it to the charging gateway (CG). The CDR carries V-UPF address information and ChargingID1, and the CDR is closed due to the session release.
(18) The V-SMF sends the session deletion response to the AMF, and the AMF sends it to the UE through the RAN. The process ends.

### Example 10

In a scenario of roaming (including cross-public land mobile network (PLMN) roaming and intra-PLMN roaming) traffic locally offloaded, before traffic offloading, a V-SMF does not need to trigger an OCS for online charging; when traffic offloading is required, traffic locally offloaded needs to trigger the OCS to ensure that the OCS can monitor all services used by a user. A credit control request sent by the V-SMF to trigger the OCS carries a same ChargingID as a credit control request sent by an H-SMF and carries a different SessionID from the credit control request sent by the H-SMF.

The traffic is directly locally offloaded through a V-UPF. An offline CDR for the V-SMF needs to change from one CDR to two CDRs. Original traffic to an H-UPF is recorded in an SMF-Visit CDR. The other is a separate CDR for the traffic locally offloaded and is recorded as an SMF-Anchor CDR.

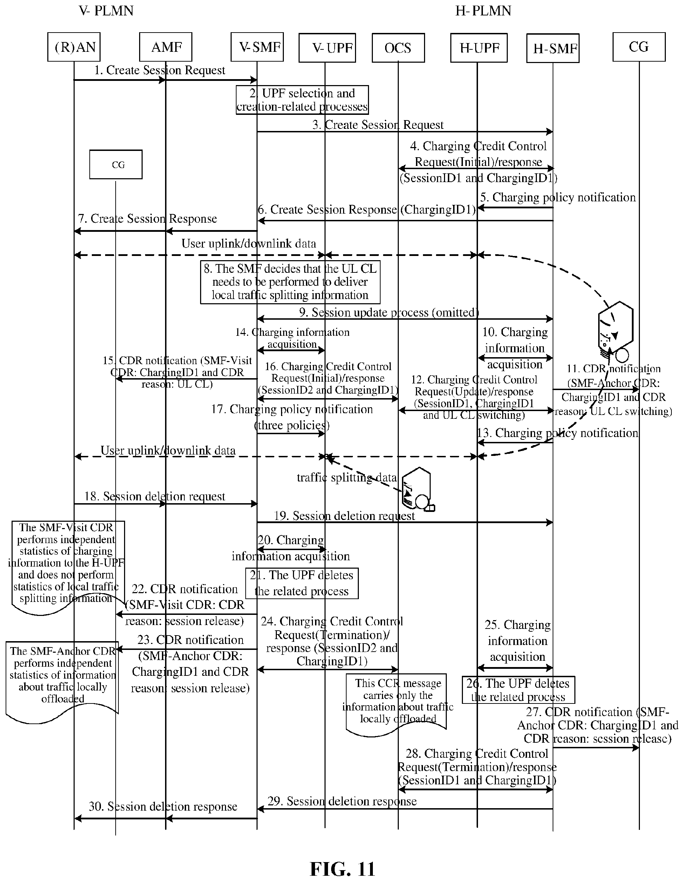

As shown in FIG. 11, in a scenario of roaming and an uplink classifier, a charging process for traffic locally offloaded may include steps (1) to (30) described below.
(1) The user uses a data service, a UE initiates a Create PDU Session Request which is sent to the SMF through a RAN and an AMF, and the SMF determines that the user performs a visit access and requires a Home-routed Roaming router.
(2) The V-SMF selects the V-UPF according to a processing rule of the V-SMF and creates a user plane channel for the user.
(3) The V-SMF sends the Create PDU Session Request to the H-SMF.
(4) The SMF sends a Credit Control Request(Initial) (CCRi) message carrying ChargingID1, SessionID1 and other data to the OCS; after receiving the request, the OCS performs credit authorization on the user according to user information. A quota of the user, a Trigger-Type and other information are carried.
(5) After receiving a response to the Credit Control Request(Initial) (CCRi) from the OCS, the H-SMF notifies the H-UPF of charging policies, and the H-UPF performs charging according to these charging policies.
(6) The H-SMF sends a Create PDU Session Response to the V-SMF, where ChargingID1 is carried in the response message to the V-SMF.
(7) The V-SMF sends the Create PDU Session Response to the AMF, the AMF sends the response to the UE through the RAN, and session creation is completed.

At this time, data messages of the user are forwarded through RAN---V-UPF---H-UPF to access an external server.
(8) The V-SMF decides that a process of the uplink classifier (UL CL) needs to be performed for local traffic splitting.
(9) Since the UL CL is performed in a visit area, the V-SMF needs to trigger an update notification to H_SMF, and the subsequent processes in which the V-SMF and the H-SMF issue CDRs may be processed in parallel or in serial (a specific update process is omitted).
(10) The H-SMF acquires from the H-UPF user plane-related charging information.
(11) The H-SMF generates an SMF-Anchor CDR according to information acquired in the above step and sends it to the charging gateway (CG). The CDR carries H-UPF address information and ChargingID1, and the CDR is closed due to UL CL switching.
(12) The H-SMF sends a Credit Control Request(Update) (CCRu) message carrying related charging information (SessionID1, ChargingID1, the H-UPF address information and other parameters) to the OCS and the OCS re-delivers charging policies.
(13) The H-SMF sends new charging policies to the H-UPF.
(14) The V-SMF acquires from the V-UPF user plane-related charging information to divide a CDR.
(15) The V-SMF generates an SMF-Visit CDR according to information acquired in the above step and sends it to the charging gateway (CG). The CDR carries V-UPF address information and ChargingID1, and the CDR is closed due to the UL CL switching.
(16) Since the V-UPF also serves as a local anchor point and the OCS is not triggered before, the V-SMF sends a Credit Control Request(Initial) (CCRi) to re-create a session with the OCS, where a SessionID is SessionID2 and ChargingID1 remains unchanged. At this time, the OCS needs to perform charging on the same session through two SMFs separately. The OCS sends a response to the Credit Control Request(Initial) (CCRi) to the V-SMF after receiving the request and performing processing.
(17) The V-SMF sends new charging policies to the V-UPF. The new charging policies include three charging policies: an online charging policy for the V-UPF as an anchor point, an offline charging policy for the V-UPF as the anchor point for locally offloaded traffic, and an offline charging policy for the V-UPF as the UL CL for traffic distributed to the H-UPF.

At this time, as for uplink and downlink data of the user, if a locally offloaded service is accessed, data is forwarded through a user plane channel RAN←→7V-UPF to access a local traffic splitting server, and if a common service is accessed, data is forwarded through a user plane channel RAN←→ V-UPF←→H-UPF to access the external server; and the UL CL switching is completed.
(18) The UE initiates a session deletion request to the V-SMF through the RAN and the AMF.
(19) The V-SMF forwards the session deletion request to the H-SMF.
(20) The V-SMF acquires from the V-UPF user plane-related charging information.
(21) The V-SMF notifies the V-UPF to delete a session-related process.
(22) The V-SMF generates an SMF-Anchor CDR according to information acquired in the above step and sends it to the charging gateway (CG). The CDR carries V-UPF address information, and the CDR is closed due to a session release. This part of information is information about traffic locally offloaded through the V-UPF.
(23) The V-SMF sends a Credit Control Request(Termination) (CCRt) message carrying related charging information (SessionID2, ChargingID1, the V-UPF address information and other parameters) to the OCS and terminates the session with the OCS. This part of information is the information about traffic locally offloaded through the V-UPF.
(24) The V-SMF generates an SMF-Visit CDR and sends it to the charging gateway (CG). The CDR carries the V-UPF address information, and the CDR is closed due to the session release.

This part of information is about traffic forwarded through RAN←→ V-UPF←→H-UPF.
(25) The H-SMF acquires from the H-UPF user plane-related charging information.
(26) The H-SMF notifies the H-UPF to delete a session-related process.
(27) The H-SMF generates an SMF-Anchor CDR according to information acquired in the above step and sends it to the charging gateway (CG). The CDR carries H-UPF address information and ChargingID1, and the CDR is closed due to a session release.
(28) The H-SMF sends a Credit Control Request(Termination) (CCRt) message carrying related charging information (SessionID1, ChargingID1, the H-UPF address information and other parameters) to the OCS and terminates the session with the OCS.
(29) The H-SMF sends a session deletion response to the V-SMF.
(30) The V-SMF sends the session deletion response to the AMF, and the AMF sends it to the UE through the RAN. The process ends.

### Example 11

In a scenario of roaming (including cross-PLMN roaming and intra-PLMN roaming) traffic locally offloaded, before traffic offloading, a V-SMF does not need to trigger an OCS for online charging; when traffic offloading is required, traffic locally offloaded needs to trigger the OCS to ensure that the OCS can monitor all services used by a user. A credit control request sent by the V-SMF to trigger the OCS carries a same ChargingID as a credit control request sent by an H-SMF and carries a different SessionID from the credit control request sent by the H-SMF.

In a scenario where traffic is not directly locally offloaded through the V-UPF but locally offloaded through MEC, when the traffic offloading is required, the V-SMF needs to carry the ChargingID in a Create PDU Session Request, and such field is used by the MEC according to needs to issue an offline CDR. The traffic offloaded onto the MEC is still counted by the V-SMF and the V-SMF interacts with the OCS to ensure that the OCS can correctly monitor information about all traffic used by the user.

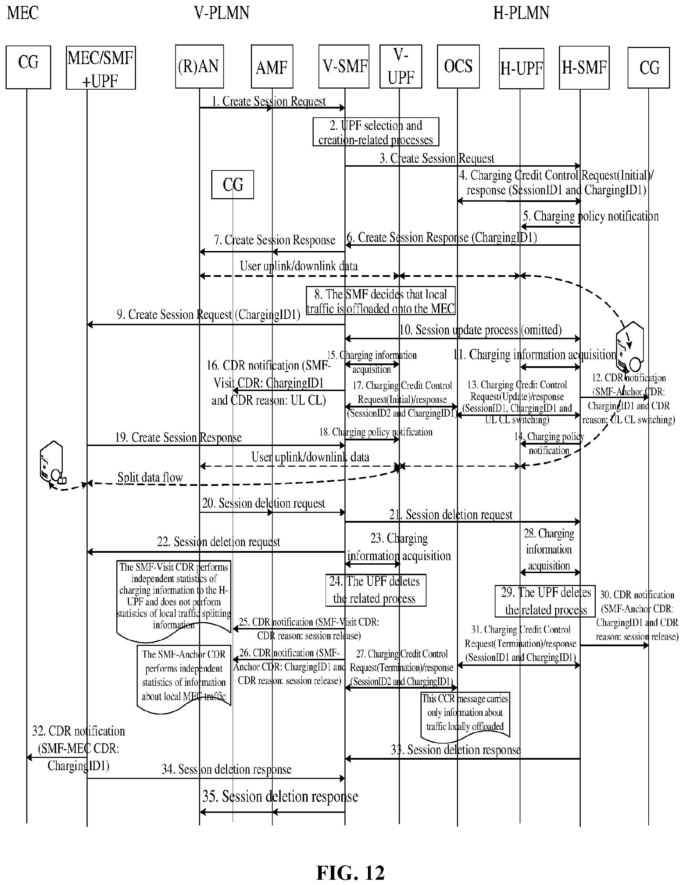

As shown in FIG. 12, in the scenario of roaming and the MEC, a charging process of traffic locally offloaded may include steps (1) to (35) described below.
(1) The user uses a data service, a UE initiates a Create PDU Session Request which is sent to the SMF through a RAN and an AMF, and the SMF determines that the user performs a visit access and requires a Home-routed Roaming router.
(2) A V-SMF selects a V-UPF according to a processing rule of the V-SMF and creates a user plane channel for the user.
(3) The V-SMF sends the Create PDU Session Request to the H-SMF.
(4) The SMF sends a Credit Control Request(Initial) (CCRi) message carrying ChargingID1, SessionID1 and other data to the OCS; after receiving the request, the OCS performs credit authorization on the user according to user information. A quota of the user, a Trigger-Type and other information are carried.
(5) After receiving a response to the Credit Control Request(Initial) (CCRi) from the OCS, the H-SMF notifies the H-UPF of charging policies, and the H-UPF performs charging according to these charging policies.
(6) The H-SMF sends a Create PDU Session Response to the V-SMF, where ChargingID1 is carried in the response message to the V-SMF.
(7) The V-SMF sends the Create PDU Session Response to the AMF, the AMF sends the response to the UE through the RAN, and session creation is completed.

At this time, data messages of the user are forwarded through RAN---V-UPF---H-UPF to access an external server.
(8) The V-SMF decides that a process of a UL CL needs to be performed for local traffic splitting and traffic needs to be forwarded to the MEC.
(9) The V-SMF sends a Create PDU Session Request to the MEC, where the Create PDU Session Request carries ChargingID1.
(10) Since the UL CL is performed in a visit area, the V-SMF needs to trigger an update notification to H_SMF, and the subsequent processes in which the V-SMF and the H-SMF issue CDRs may be processed in parallel or in serial (a specific update process is omitted).
(11) The H-SMF acquires from the H-UPF user plane-related charging information.
(12) The H-SMF generates an SMF-Anchor CDR according to information acquired in the above step and sends it to a charging gateway (CG). The CDR carries H-UPF address information and ChargingID1, and the CDR is closed due to UL CL switching.
(13) The H-SMF sends a Credit Control Request(Update) (CCRu) message carrying related charging information (SessionID1, ChargingID1, the H-UPF address information and other parameters) to the OCS and the OCS re-delivers charging policies.
(14) The H-SMF sends new charging policies to the H-UPF.
(15) The V-SMF acquires from the V-UPF user plane-related charging information to divide a CDR.
(16) The V-SMF generates an SMF-Visit CDR according to information acquired in the above step and sends it to the charging gateway (CG). The CDR carries V-UPF address information and ChargingID1, and the CDR is closed due to the UL CL switching.
(17) Although the V-SMF re-initiates a session creation to the MEC for a traffic offloading process, considering that the MEC generally does not completely access a data center, the V-UPF is still used as the anchor point for charging of the offloaded traffic in the present application. Since the V-UPF also serves as a local anchor point and the OCS is not triggered before, the SMF sends a Credit Control Request(Initial) (CCRi) to re-create a session with the OCS, where a SessionID is SessionID2 and ChargingID1 remains unchanged. At this time, the OCS needs to perform charging on the same session through two SMFs separately. The OCS sends a response to the Credit Control Request(Initial) (CCRi) to the V-SMF after receiving the request and performing processing.
(18) The V-SMF sends new charging policies to the V-UPF. The new charging policies include three charging policies: an online charging policy for the V-UPF as the anchor point, an offline charging policy for the V-UPF as the anchor point for traffic offloaded onto MEC, and an offline charging policy for the V-UPF as the UL CL for traffic distributed to the H-UPF.
(19) The MEC sends a Create PDU Session Response message to the V-SMF.

At this time, as for uplink and downlink data of the user, if a locally offloaded service is accessed, data is forwarded through a user plane channel RAN←→V-UPF←→MEC to access a local traffic splitting server, and if a common service is accessed, data is forwarded through a user plane channel RAN←→V-UPF←→H-UPF to access the external server; and the UL CL switching is completed.
(20) The UE initiates a session deletion request to the V-SMF through the RAN and the AMF.
(21) The V-SMF forwards the session deletion request to the H-SMF.
(22) The V-SMF forwards the session deletion request to the MEC. (The V-SMF, the H-SMF and the MEC may issue CDRs in parallel or in serial. A one-to-one description in the present application does not represent a necessary order.)
(23) The V-SMF acquires from the V-UPF user plane-related charging information.
(24) The V-SMF notifies the V-UPF to delete a session-related process.
(25) The V-SMF generates an SMF-Anchor CDR according to information acquired in the above step and sends it to the charging gateway (CG). The CDR carries V-UPF address information, and the CDR is closed due to a session release. This part of information is information about traffic locally offloaded through the V-UPF.
(26) The V-SMF sends a Credit Control Request(Termination) (CCRt) message carrying related charging information (SessionID2, ChargingID1, the V-UPF address information and other parameters) to the OCS and terminates the session with the OCS. This part of information is the information about traffic locally offloaded through the V-UPF.
(27) The V-SMF generates an SMF-Visit CDR and sends it to the charging gateway (CG). The CDR carries the V-UPF address information, and the CDR is closed due to the session release. This part of information is about traffic forwarded through RAN←→ V-UPF←→H-UPF.
(28) The H-SMF acquires from the H-UPF user plane-related charging information.
(29) The H-SMF notifies the H-UPF to delete a session-related process.
(30) The H-SMF generates an SMF-Anchor CDR according to information acquired in the above step and sends it to the charging gateway (CG). The CDR carries H-UPF address information and ChargingID1, and the CDR is closed due to a session release.
(31) The H-SMF sends a Credit Control Request(Termination) (CCRt) message carrying related charging information (SessionID1, ChargingID1, the H-UPF address information and other parameters) to the OCS and terminates the session with the OCS.
(32) The MEC generates an SMF-MEC CDR and sends it to the charging gateway (CG). The CDR carries MEC address information, and the CDR is closed due to the session release. This part of information is information about traffic locally offloaded through RAN←→ V-UPF←→MEC.
(33) The H-SMF sends a session deletion response to the V-SMF.
(34) The MEC sends the session deletion response to the V-SMF.
(35) The V-SMF sends the session deletion response to the AMF, and the AMF sends it to the UE through the RAN. The process ends.

## Claims

1. A charging method, which is applied to a session management function, SMF, comprising:
sending an online charging message (3, 8, 10, 12, 13, 14, 16, 18, 19, 21) to an online charging system, OCS, for a session in a plurality of sessions with charging association, wherein the online charging message (3, 8, 10, 12, 13, 14, 16, 18, 19, 21) carries an identifier corresponding to a user plane function, UPF carrying user equipment service traffic on the session, and a unified charging identifier associated with the plurality of sessions with a charging association; and
receiving a charging response message (3, 8, 10, 12, 13, 14, 16, 18, 19, 21) based on the online charging message from the OCS, wherein the charging response message (3, 8, 10, 12, 13, 14, 16, 18, 19, 21) carries the unified charging identifier,
wherein the unified charging identifier is created by the SMF,
each of the session is corresponding to an anchor UPF,
the unified charging identifier comprises: a charging identifier sequence number,
the online charging message (3, 8, 10, 12, 13, 14, 16, 18, 19, 21) is associated with UPF, and the charging response message (3, 8, 10, 12, 13, 14, 16, 18, 19, 21) is a response to the online charging message.

2. The charging method of claim 1, wherein the unified charging identifier further comprises: an identifier of a network element.

3. The charging method of claim 1, further comprising: before sending the online charging message (3, 8, 10, 12, 13, 14, 16, 18, 19, 21), creating a session to the OCS for charging the traffic carried by the UPF.

4. The charging method of claim 1, wherein the plurality of sessions with the charging association comprise:
in a scenario of a service session connection, SSC, mode 2 or an SSC mode 3, a first session corresponding to a first anchor UPF before session switching and a second session corresponding to a second anchor UPF after the session switching.

5. The charging method of claim 4, further comprising:
sending, by the SMF, offline charging bills to a charging gateway, CG, separately for the first session and the second session with the charging association to count traffic information before the session switching and traffic information after the session switching separately.

6. The charging method of claim 1, wherein the plurality of sessions with the charging association comprise:
in a scenario of non-roaming and an uplink classifier, sessions corresponding to a plurality of anchor UPFs carrying service traffic split by the uplink classifier.

7. The charging method of claim 1, wherein the charging response message (3, 8, 10, 12, 13, 14, 16, 18, 19, 21) further comprises trigger indication information.

8. The charging method of claim 7, the method further comprises: in response to determining that the trigger indication information and a trigger corresponding to the trigger indication information is related to notifying the OCS of a change of the uplink classifier, or the SMF is locally configured with a service rule for notifying the OCS of the change of the uplink classifier, after inserting the uplink classifier, notifying, by the SMF, the OCS that the uplink classifier has been inserted for an uplink service, and receiving a new traffic quota re-delivered by the OCS for a session that already exists before the uplink classifier is inserted.

9. The charging method of claim 6, further comprising:
sending, by the SMF, an offline charging bill to a charging gate, CG, for each of the plurality of sessions with the charging association to count information about traffic carried by each of the plurality of anchor UPFs.

10. The charging method of claim 6 further comprising:
sending, by the SMF, an offline charging bill to a CG, for the uplink classifier to count information about traffic assigned by the uplink classifier to each of the plurality of anchor UPFs.

11. The charging method of claim 1, wherein the plurality of sessions with the charging association comprise:
in a scenario of non-roaming traffic offloaded onto a mobile edge computing, MEC, a first session corresponding to a first anchor UPF carrying a part of service traffic and a second session corresponding to a second UPF serving as the MEC and carrying the other part of the service traffic.

12. The charging method of claim 1, wherein the plurality of sessions with the charging association comprise:
in a scenario of roaming traffic locally offloaded through a visit anchor UPF, a first session corresponding to a home anchor UPF carrying partial roaming traffic and a second session corresponding to the visit anchor UPF carrying the roaming traffic locally offloaded in a roaming area.

13. The charging method of claim 1, wherein the plurality of sessions with the charging association comprise:
in a scenario of roaming traffic locally offloaded through MEC in a roaming area, a first session corresponding to a home anchor UPF carrying partial roaming traffic and a second session corresponding to the MEC in the roaming area carrying the roaming traffic locally offloaded in the roaming area.

14. The charging method of claim 12, further comprising:
in response to determining that the SMF is a visit SMF, sending, by the visit SMF, an offline charging bill to a CG to count information about the roaming traffic carried by the home anchor UPF and information about the roaming traffic locally offloaded through the visit anchor UPF; or
in response to determining that the SMF is a home SMF, sending, by the home SMF, an offline charging bill to a CG to count information about the roaming traffic carried by the home anchor UPF.

15. The charging method of claim 13, further comprising:
in response to determining that the SMF is a visit SMF, sending, by the visit SMF, an offline charging bill to a CG to count information about the roaming traffic carried by the home anchor UPF and information about the roaming traffic locally offloaded through the MEC in the roaming area; or
in response to determining that the SMF is a home SMF, sending, by the home SMF, an offline charging bill to a CG to count information about the roaming traffic carried by the home anchor UPF.

16. The charging method of any of claims 1 to 15, wherein the online charging message (3, 8, 10, 12, 13, 14, 16, 18, 19, 21) comprise any of: a charging credit control initial request, a charging credit control update request, or charging credit control termination request; and
wherein the charging response message (3, 8, 10, 12, 13, 14, 16, 18, 19, 21) comprises any of a response to the charging credit control initial request, a response to the charging credit control update request, or a response to the charging credit control termination request.

17. A session management function, comprising:
a memory, a processor and a charging program stored in the memory and executable by the processor, wherein the charging program, when executed by the processor, implements the charging method of any one of claims 1 to 16.

18. A computer-readable storage medium, which is configured to store a charging program which, when executed by a processor, implements the charging method of any one of claims 1 to 16.

## Patentansprüche

1. Ein Ladevorgang, der auf eine Sitzungsmanagementfunktion (Session Management Function, SMF) angewendet wird, umfassend:
das Senden einer Online-Lademeldung (3, 8, 10, 12, 13, 14, 16, 18, 19, 21) an ein Online-Ladesystem (Online Charging System, OCS) für eine Sitzung in einer Vielzahl von Sitzungen mit einer Ladeassoziation, wobei die Online-Lademeldung (3, 8, 10, 12, 13, 14, 16, 18, 19, 21) einen Identifikator enthält, der einer User-Plane-Funktion (UPF) entspricht, die Benutzergeräte-Dienstverkehr in der Sitzung überträgt, und einen einheitlichen Ladeidentifikator, der mit der Vielzahl von Sitzungen mit einer Ladeassoziation verbunden ist; und
das Empfangen einer Ladeantwortmeldung (3, 8, 10, 12, 13, 14, 16, 18, 19, 21) basierend auf der Online-Lademeldung von dem OCS, wobei die Ladeantwortmeldung (3, 8, 10, 12, 13, 14, 16, 18, 19, 21) den einheitlichen Ladeidentifikator enthält,
wobei der einheitliche Ladeidentifikator von der SMF erstellt wird,
jede der Sitzungen einer Anker-UPF entspricht,
der einheitliche Ladeidentifikator umfasst: eine Ladeidentifikator-Sequenznummer,
die Online-Lademeldung (3, 8, 10, 12, 13, 14, 16, 18, 19, 21) ist mit der UPF verbunden, und die Ladeantwortmeldung (3, 8, 10, 12, 13, 14, 16, 18, 19, 21) ist eine Antwort auf die Online-Lademeldung.

2. Der Ladevorgang gemäß Anspruch 1, wobei der einheitliche Ladeidentifikator ferner umfasst: einen Identifikator eines Netzelements.

3. Der Ladevorgang gemäß Anspruch 1, ferner umfassend: vor dem Senden der Online-Lademeldung (3, 8, 10, 12, 13, 14, 16, 18, 19, 21) das Erstellen einer Sitzung zu dem OCS zum Laden des Verkehrs, der von der UPF übertragen wird.

4. Der Ladevorgang gemäß Anspruch 1, wobei die Vielzahl von Sitzungen mit der Ladeassoziation umfasst:
in einem Szenario einer Service-Session-Connection (SSC), Modus 2 oder einem SSC-Modus 3, eine erste Sitzung, die einer ersten Anker-UPF vor dem Sitzungsumschalten entspricht, und eine zweite Sitzung, die einer zweiten Anker-UPF nach dem Sitzungsumschalten entspricht.

5. Der Ladevorgang gemäß Anspruch 4, ferner umfassend:
das Senden, durch die SMF, von Offline-Ladeabrechnungen an ein Lade-Gateway (Charging Gateway, CG) für die erste Sitzung und die zweite Sitzung mit der Ladeassoziation, um den Verkehrsdatenverkehr vor dem Sitzungsumschalten und den Verkehrsdatenverkehr nach dem Sitzungsumschalten getrennt zu erfassen.

6. Der Ladevorgang gemäß Anspruch 1, wobei die Vielzahl von Sitzungen mit der Ladeassoziation umfasst:
in einem Nicht-Roaming-Szenario und einem Uplink-Klassifizierer, Sitzungen, die einer Vielzahl von Anker-UPFs entsprechen und einen durch den Uplink-Klassifizierer aufgeteilten Dienstverkehr übertragen.

7. Der Ladevorgang gemäß Anspruch 1, wobei die Ladeantwortmeldung (3, 8, 10, 12, 13, 14, 16, 18, 19, 21) ferner Informationen zur Auslösung enthält.

8. Der Ladevorgang gemäß Anspruch 7, wobei der Ladevorgang ferner umfasst: in Reaktion darauf, dass festgestellt wird, dass die Informationen zur Auslösung und eine Auslösung, die mit den Informationen zur Auslösung in Verbindung stehen, darauf hindeuten, dass das OCS über eine Änderung des Uplink-Klassifizierers informiert werden soll, oder dass die SMF lokal mit einer Service-Regel konfiguriert ist, um das OCS über die Änderung des Uplink-Klassifizierers zu informieren, nach dem Einfügen des Uplink-Klassifizierers, Benachrichtigen des OCS durch die SMF darüber, dass der Uplink-Klassifizierer für einen Uplink-Dienst eingefügt wurde, und Empfangen eines vom OCS erneut bereitgestellten neuen Verkehrsquotas für eine Sitzung, die bereits vor dem Einfügen des Uplink-Klassifizierers besteht.

9. Das Verfahren zur Abrechnung gemäß Anspruch 6, das ferner Folgendes umfasst:
das Senden einer Offline-Abrechnung durch die SMF an ein Abrechnungsgate, CG, für jede der mehreren Sitzungen mit der Abrechnungsassoziation, um Informationen über den Verkehr zu erfassen, der von jeder der mehreren Anker-UPFs übertragen wird.

10. Das Verfahren zur Abrechnung gemäß Anspruch 6, das ferner Folgendes umfasst:
das Senden einer Offline-Abrechnung durch die SMF an ein CG, um Informationen über den Verkehr zu erfassen, der vom Uplink-Klassifikator jeder der mehreren Anker-UPFs zugewiesen wird.

11. Das Verfahren zur Abrechnung gemäß Anspruch 1, wobei die mehreren Sitzungen mit der Abrechnungsassoziation Folgendes umfassen:
in einem Szenario von Nicht-Roaming-Verkehr, der auf ein Mobile Edge Computing (MEC) ausgelagert wird, eine erste Sitzung, die einem ersten Anker-UPF entspricht und einen Teil des Dienstverkehres überträgt, und eine zweite Sitzung, die einem zweiten UPF entspricht, der als MEC fungiert und den anderen Teil des Dienstverkehres überträgt.

12. Das Verfahren zur Abrechnung gemäß Anspruch 1, wobei die mehreren Sitzungen mit der Abrechnungsassoziation Folgendes umfassen:
in einem Szenario von lokal ausgelagertem Roaming-Verkehr über einen Visit-Anker-UPF, eine erste Sitzung, die einem Home-Anker-UPF entspricht und einen Teil des Roaming-Verkehrs überträgt, und eine zweite Sitzung, die dem Visit-Anker-UPF entspricht und den lokal im Roaming-Bereich ausgelagerten Roaming-Verkehr überträgt.

13. Das Verfahren zur Abrechnung gemäß Anspruch 1, wobei die mehreren Sitzungen mit der Abrechnungsassoziation Folgendes umfassen:
in einem Szenario von lokal ausgelagertem Roaming-Verkehr über MEC in einem Roaming-Bereich, eine erste Sitzung, die einem Home-Anker-UPF entspricht und einen Teil des Roaming-Verkehrs überträgt, und eine zweite Sitzung, die dem MEC im Roaming-Bereich entspricht und den lokal im Roaming-Bereich ausgelagerten Roaming-Verkehr überträgt.

14. Das Verfahren zur Abrechnung gemäß Anspruch 12, das ferner Folgendes umfasst:
in Reaktion auf die Bestimmung, dass die SMF eine Visit-SMF ist, das Senden einer Offline-Abrechnung durch die Visit-SMF an ein CG, um Informationen über den vom Home-Anker-UPF übertragenen Roaming-Verkehr und Informationen über den lokal über den Visit-Anker-UPF ausgelagerten Roaming-Verkehr zu erfassen; oder
in Reaktion auf die Bestimmung, dass die SMF eine Home-SMF ist, das Senden einer Offline-Abrechnung durch die Home-SMF an ein CG, um Informationen über den vom Home-Anker-UPF übertragenen Roaming-Verkehr zu erfassen.

15. Das Verfahren zur Abrechnung gemäß Anspruch 13, das ferner Folgendes umfasst:
in Reaktion auf die Bestimmung, dass die SMF eine Visit-SMF ist, das Senden einer Offline-Abrechnung durch die Visit-SMF an ein CG, um Informationen über den vom Home-Anker-UPF übertragenen Roaming-Verkehr und Informationen über den lokal über das MEC im Roaming-Bereich ausgelagerten Roaming-Verkehr zu erfassen; oder
in Reaktion auf die Bestimmung, dass die SMF eine Home-SMF ist, das Senden einer Offline-Abrechnung durch die Home-SMF an ein CG, um Informationen über den vom Home-Anker-UPF übertragenen Roaming-Verkehr zu erfassen.

16. Das Verfahren zur Abrechnung gemäß einem der Ansprüche 1 bis 15, wobei die Online-Abrechnungsnachricht (3, 8, 10, 12, 13, 14, 16, 18, 19, 21) Folgendes umfassen kann: eine initiale Anforderungsnachricht zur Abrechnungs-Credit-Kontrolle, eine Update-Anforderungsnachricht zur Abrechnungs-Credit-Kontrolle oder eine Beendigungsanforderungsnachricht zur Abrechnungs-Credit-Kontrolle; und
wobei die Abrechnungserfolgsnachricht (3, 8, 10, 12, 13, 14, 16, 18, 19, 21) Folgendes umfassen kann: eine Antwort auf die initiale Anforderungsnachricht zur Abrechnungs-Credit-Kontrolle, eine Antwort auf die Update-Anforderungsnachricht zur Abrechnungs-Credit-Kontrolle oder eine Antwort auf die Beendigungsanforderungsnachricht zur Abrechnungs-Credit-Kontrolle.

17. Eine Sitzungsverwaltungsfunktion, umfassend:
einen Speicher, einen Prozessor und ein Abrechnungsprogramm, das im Speicher gespeichert ist und durch den Prozessor ausführbar ist, wobei das Abrechnungsprogramm, wenn es vom Prozessor ausgeführt wird, das Verfahren zur Abrechnung gemäß einem der Ansprüche 1 bis 16 implementiert.

18. Ein computerlesbares Speichermedium, das so konfiguriert ist, dass es ein Abrechnungsprogramm speichert, das, wenn es von einem Prozessor ausgeführt wird, das Verfahren zur Abrechnung gemäß einem der Ansprüche 1 bis 16 implementiert.

## Revendications

1. Procédé de taxation, qui est appliqué à une fonction de gestion de session, SMF, comprenant :
l'envoi d'un message de taxation en ligne (3, 8, 10, 12, 13, 14, 16, 18, 19, 21) à un système de taxation en ligne, OCS, pour une session dans une pluralité de sessions ayant une association de taxation, dans lequel le message de taxation en ligne (3, 8, 10, 12, 13, 14, 16, 18, 19, 21) porte un identifiant correspondant à une fonction de plan utilisateur, UPF, portant du trafic de service d'équipement utilisateur sur la session, et un identifiant de taxation unifié associé à la pluralité de sessions ayant une association de taxation ; et
la réception d'un message de réponse de taxation (3, 8, 10, 12, 13, 14, 16, 18, 19, 21) sur la base du message de taxation en ligne provenant de l'OCS, dans lequel le message de réponse de taxation (3, 8, 10, 12, 13, 14, 16, 18, 19, 21) porte l'identifiant de taxation unifié,
dans lequel l'identifiant de taxation unifié est créé par la SMF,
chacune de la session correspond à une UPF d'ancrage,
l'identifiant de taxation unifié comprend : un numéro de séquence d'identifiant de taxation,
le message de taxation en ligne (3, 8, 10, 12, 13, 14, 16, 18, 19, 21) est associé à l'UPF, et le message de réponse de taxation (3, 8, 10, 12, 13, 14, 16, 18, 19, 21) est une réponse au message de taxation en ligne.

2. Procédé de taxation selon la revendication 1, dans lequel l'identifiant de taxation unifié comprend en outre : un identifiant d'un élément de réseau.

3. Procédé de taxation selon la revendication 1, comprenant en outre : avant l'envoi du message de taxation en ligne (3, 8, 10, 12, 13, 14, 16, 18, 19, 21), la création d'une session vers l'OCS pour taxer le trafic porté par l'UPF.

4. Procédé de taxation selon la revendication 1, dans lequel la pluralité de sessions ayant l'association de taxation comprend :
dans un scénario d'une connexion de session de service, SSC, mode 2 ou d'un mode SSC 3, une première session correspondant à une première UPF d'ancrage avant une commutation de session et une deuxième session correspondant à une deuxième UPF d'ancrage après la commutation de session.

5. Procédé de taxation selon la revendication 4, comprenant en outre :
l'envoi, par la SMF, de factures de taxation hors ligne à une passerelle de taxation, CG, séparément pour la première session et la deuxième session ayant l'association de taxation afin de compter des informations de trafic avant la commutation de session et des informations de trafic après la commutation de session séparément.

6. Procédé de taxation selon la revendication 1, dans lequel la pluralité de sessions ayant l'association de taxation comprend :
dans un scénario de non-itinérance et d'un classificateur de liaison montante, des sessions correspondant à une pluralité d'UPF d'ancrage portant du trafic de service divisé par le classificateur de liaison montante.

7. Procédé de taxation selon la revendication 1, dans lequel le message de réponse de taxation (3, 8, 10, 12, 13, 14, 16, 18, 19, 21) comprend en outre des informations d'indication de déclencheur.

8. Procédé de taxation selon la revendication 7, le procédé comprend en outre : en réponse à la détermination que les informations d'indication de déclencheur et un déclencheur correspondant aux informations d'indication de déclencheur sont liés à la notification à l'OCS d'un changement du classificateur de liaison montante, ou que la SMF est configurée localement avec une règle de service pour notifier à l'OCS le changement du classificateur de liaison montante, après l'insertion du classificateur de liaison montante, la notification, par la SMF, à l'OCS que le classificateur de liaison montante a été inséré pour un service de liaison montante, et la réception d'un nouveau quota de trafic redistribué par l'OCS pour une session qui existe déjà avant que le classificateur de liaison montante soit inséré.

9. Procédé de taxation selon la revendication 6, comprenant en outre :
l'envoi, par la SMF, d'une facture de taxation hors ligne à une porte de taxation, CG, pour chacune de la pluralité de sessions ayant l'association de taxation afin de compter des informations concernant le trafic porté par chacune de la pluralité d'UPF d'ancrage.

10. Procédé de taxation selon la revendication 6 comprenant en outre :
l'envoi, par la SMF, d'une facture de taxation hors ligne à une CG, pour le classificateur de liaison montante afin de compter des informations concernant le trafic affecté par le classificateur de liaison montante à chacune de la pluralité d'UPF d'ancrage.

11. Procédé de taxation selon la revendication 1, dans lequel la pluralité de sessions ayant l'association de taxation comprend :
dans un scénario de trafic de non-itinérance délesté sur une informatique en périphérie mobile, MEC, une première session correspondant à une première UPF d'ancrage portant une partie de trafic de service et une deuxième session correspondant à une deuxième UPF servant de MEC et portant l'autre partie du trafic de service.

12. Procédé de taxation selon la revendication 1, dans lequel la pluralité de sessions ayant l'association de taxation comprend :
dans un scénario de trafic d'itinérance délesté localement par l'intermédiaire d'une UPF d'ancrage visitée, une première session correspondant à une UPF d'ancrage de rattachement portant du trafic d'itinérance partiel et une deuxième session correspondant à l'UPF d'ancrage visitée portant le trafic d'itinérance délesté localement dans une zone d'itinérance.

13. Procédé de taxation selon la revendication 1, dans lequel la pluralité de sessions ayant l'association de taxation comprend :
dans un scénario de trafic d'itinérance délesté localement par l'intermédiaire d'un MEC dans une zone d'itinérance, une première session correspondant à une UPF d'ancrage de rattachement portant du trafic d'itinérance partiel et une deuxième session correspondant au MEC dans la zone d'itinérance portant le trafic d'itinérance délesté localement dans la zone d'itinérance.

14. Procédé de taxation selon la revendication 12, comprenant en outre :
en réponse à la détermination que la SMF est une SMF visitée, l'envoi, par la SMF visitée, d'une facture de taxation hors ligne à une CG afin de compter des informations concernant le trafic d'itinérance porté par l'UPF d'ancrage de rattachement et des informations concernant le trafic d'itinérance délesté localement par l'intermédiaire de l'UPF d'ancrage visitée ; ou
en réponse à la détermination que la SMF est une SMF de rattachement, l'envoi, par la SMF de rattachement, d'une facture de taxation hors ligne à une CG afin de compter des informations concernant le trafic d'itinérance porté par l'UPF d'ancrage de rattachement.

15. Procédé de taxation selon la revendication 13, comprenant en outre :
en réponse à la détermination que la SMF est une SMF visitée, l'envoi, par la SMF visitée, d'une facture de taxation hors ligne à une CG afin de compter des informations concernant le trafic d'itinérance porté par l'UPF d'ancrage de rattachement et des informations concernant le trafic d'itinérance délesté localement par l'intermédiaire du MEC dans la zone d'itinérance ; ou
en réponse à la détermination que la SMF est une SMF de rattachement, l'envoi, par la SMF de rattachement, d'une facture de taxation hors ligne à une CG afin de compter des informations concernant le trafic d'itinérance porté par l'UPF d'ancrage de rattachement.

16. Procédé de taxation selon l'une quelconque des revendications 1 à 15, dans lequel le message de taxation en ligne (3, 8, 10, 12, 13, 14, 16, 18, 19, 21) comprend l'une quelconque des suivantes : une demande initiale de contrôle de crédit de taxation, une demande de mise à jour de contrôle de crédit de taxation, ou une demande de terminaison de contrôle de crédit de taxation; et
dans lequel le message de réponse de taxation (3, 8, 10, 12, 13, 14, 16, 18, 19, 21) comprend l'une quelconque d'une réponse à la demande initiale de contrôle de crédit de taxation, d'une réponse à la demande de mise à jour de contrôle de crédit de taxation, ou d'une réponse à la demande de terminaison de contrôle de crédit de taxation.

17. Fonction de gestion de session, comprenant :
une mémoire, un processeur et un programme de taxation stocké dans la mémoire et exécutable par le processeur, dans laquelle le programme de taxation, lorsqu'il est exécuté par le processeur, met en œuvre le procédé de taxation selon l'une quelconque des revendications 1 à 16.

18. Support de stockage lisible par ordinateur, qui est configuré pour stocker un programme de taxation qui, lorsqu'il est exécuté par un processeur, met en œuvre le procédé de taxation selon l'une quelconque des revendications 1 à 16.
